# EUROPEAN PATENT APPLICATION

(11) **EP 4 068 069 A1**
(43) Date of publication of application: **05.10.2022**
(21) Application number: 20907148.9
(22) Date of filing: 19.11.2020
(51) Int. Cl.: G06F 3/0484

(54) **METHOD FOR CONTROLLING DISPLAY OF SCREEN, AND ELECTRONIC DEVICE**

(30) Priority: 27.12.2019 CN 201911377589
(71) Applicant: Huawei Technologies Co., Ltd., Shenzhen, Guangdong 518129 (CN)
(72) Inventor: YAN, Zhongsheng, Shenzhen, Guangdong 518129 (CN); DONG, Minmin, Shenzhen, Guangdong 518129 (CN)
(74) Representative: Pfenning, Meinig & Partner mbB
(86) International application number: PCT/CN2020/130138
(87) International publication number: WO 2021/129254

(57) **Abstract**

A screen display control method and an electronic device are provided. The method is performed by an electronic device provided with a foldable screen, the screen is divided into a first area and a second area when the screen is folded, the first area corresponds to a first sensor, and the second area corresponds to a second sensor. The method includes: displaying an interface of a first application in the first area (2010); detecting first user identification information by using the first sensor (2020); storing a correspondence between the first application and the first user identification information (2030); and controlling display in the first area and the second area based on user identification information detected by the first sensor and the second sensor (2040). In the foregoing method, an application is bound to user identification information. In this way, when a screen facing a user changes, the electronic device may display an interface of an application bound to the user on a screen currently used by the user. This is convenient for the user to view and operate.

## Description

This application claims priority to Chinese Patent Application No. 201911377589.6, filed with the China National Intellectual Property Administration on December 27, 2019 and entitled "SCREEN DISPLAY CONTROL METHOD AND ELECTRONIC DEVICE", which is incorporated herein by reference in its entirety.

### TECHNICAL FIELD

This application relates to the field of electronic devices, and more specifically, to a screen display control method and an electronic device.

### BACKGROUND

As foldable electronic devices enter people's life, split-screen use of the electronic devices also becomes a common manner. When a foldable electronic device is in a folded state, the foldable electronic device may separately perform displaying in display areas on two sides of a folding line. Because the foldable electronic device has usable display areas on two sides, a user may change a used display area.

Currently, when the user changes from facing one display area to facing the other display area for viewing, content currently viewed by the user is still displayed in the original display area. This is inconvenient for the user to view and operate.

### SUMMARY

This application provides a screen display control method and an electronic device, so that when a user changes from facing one display area to facing the other display area for viewing, content currently viewed by the user can be displayed in the other display area. This is convenient for the user to view and operate.

According to a first aspect, this application provides a screen display control method. The method is performed by an electronic device provided with a foldable screen, the screen is divided into a first area and a second area when the screen is folded, the first area corresponds to a first sensor, and the second area corresponds to a second sensor. The method includes: displaying an interface of a first application in the first area; detecting first user identification information by using the first sensor; storing a correspondence between the first application and the first user identification information; and if the first user identification information is detected by using the second sensor, displaying the interface of the first application in the second area based on the correspondence between the first application and the first user identification information.

It should be understood that the first sensor and the second sensor may be any sensor that can detect user identification information, for example, may be a fingerprint sensor, an iris sensor, or a structured light sensor.

Disposing positions of the first sensor and the second sensor are not specifically limited in this application, provided that the first sensor can detect user identification information entered by a user in the first area and the second sensor can detect user identification information entered by a user in the second area.

For example, the first sensor may be disposed in the first area, and the second sensor may be disposed in the second area.

For another example, the first sensor and the second sensor may also be disposed on a same side, but are respectively configured to detect the user identification information entered by the user in the first area and the user identification information entered by the user in the second area.

The user identification information is information that can uniquely determine a user identity. For example, the user identification information may be face information of a user collected by the structured light sensor, fingerprint information of a user collected by the fingerprint sensor, or iris information of a user collected by the iris sensor.

In the foregoing technical solution, an application is bound to user identification information. In this way, when a screen facing a user changes, the electronic device may display an interface of an application bound to the user on a screen currently used by the user. This is convenient for the user to view and operate.

In a possible implementation, the method further includes: if the first user identification information is detected by using the second sensor, displaying the interface of the first application in the second area, and turning off the first area or displaying a desktop interface in the first area.

In the foregoing technical solution, when the screen facing the user changes, the interface of the application bound to the user is displayed on the screen currently used by the user, and the screen originally facing the user is turned off. This helps reduce power consumption of the electronic device.

In a possible implementation, the method further includes: displaying an interface of a second application in the second area; detecting second user identification information by using the second sensor; storing a correspondence between the second application and the second user identification information; and if the second user identification information is detected by using the first sensor but the first user identification information is not detected, displaying the interface of the second application in the first area based on the correspondence between the second application and the second user identification information.

In the foregoing technical solution, when a plurality of users use the electronic device in split-screen mode, an application is bound to user identification information. In this way, when a screen facing a user changes, the electronic device may display an interface of an application bound to the user on a screen currently used by the user. This is convenient for the user to view and operate.

In a possible implementation, the method further includes: if the second user identification information is detected by using the first sensor, and the first user identification information is detected by using the second sensor, displaying the interface of the first application in the second area, and displaying the interface of the second application in the first area.

In the foregoing technical solution, when a plurality of users use the electronic device in split-screen mode, an application is bound to user identification information. In this way, when a screen facing a user changes, the electronic device may display an interface of an application bound to the user on a screen currently used by the user. This is convenient for the user to view and operate.

In a possible implementation, the method further includes: turning off the first area if any user identification information is not detected by using the first sensor, or user identification information detected by using the first sensor does not correspond to any application in the electronic device.

In the foregoing technical solution, when the first sensor does not detect any user identification information, or detected user identification information does not correspond to any application in the electronic device, that is, when the user no longer uses the first area, the electronic device turns off the first area. This helps reduce power consumption of the electronic device.

In a possible implementation, the method further includes: if the first user identification information and the second user identification information are detected by using the first sensor, displaying the interface of the first application in the first area.

In other words, when two users using the electronic device in split-screen mode change from respectively using the first area and the second area to jointly using the first area, the interface of the first application is still displayed in the first area.

In a possible implementation, the method further includes: if the first user identification information and the third user identification information are detected by using the first sensor, and the third user identification information does not correspond to any application in the electronic device, displaying the interface of the first application in the first area.

In the foregoing technical solution, when a new user uses the first area, because an original user still uses the first area, the interface of the first application is still displayed in the first area.

In a possible implementation, the method further includes: prompting a user whether to store a correspondence between the first application and the third user identification information; detecting a first operation in the first area; and in response to the first operation, storing the correspondence between the first application and the third user identification information.

In a possible implementation, the method further includes: if the first user identification information is detected by using both the first sensor and the second sensor, displaying the interface of the second application in the first area, and displaying the interface of the first application in the second area; or displaying the interface of the first application in the first area, and displaying the interface of the second application in the second area.

That is, when user identification information is detected in both the first area and the second area, the electronic device may exchange content displayed in the first area and content displayed in the second area, or may not exchange content displayed in the first area and content displayed in the second area.

In a possible implementation, the method further includes: detecting a second operation in the first area; and in response to the second operation, closing the second application, and displaying a desktop interface or an interface displayed before the second application is started in the first area.

In a possible implementation, after the closing the second application, the method further includes: detecting a third operation in the first area; in response to the third operation, starting a third application and displaying an interface of the third application in the first area; and storing a correspondence between the third application and the second user identification information.

According to the foregoing technical solution, even if a user changes a used application, "a screen change following a user" can still be implemented. This is convenient for the user to view and operate.

In a possible implementation, the first user identification information and the second user identification information include face information, fingerprint information, and iris information.

In a possible implementation, before the detecting first user identification information by using the first sensor, the method further includes: prompting the user to enter user identification information corresponding to the first application.

In a possible implementation, the first application is an application displayed in the entire first area before the first user identification information is detected by using the first sensor, or an application selected by the user from at least two applications currently displayed in the first area.

In a possible implementation, before the detecting first user identification information by using the first sensor, the method further includes: determining that the electronic device is in a folded form or a support form.

According to a second aspect, this application provides a screen display control apparatus. The apparatus is included in an electronic device, and the apparatus has a function of implementing behavior of the electronic device in the foregoing aspect and the possible implementations of the foregoing aspect. The function may be implemented by hardware, or may be implemented by hardware by executing corresponding software. The hardware or the software includes one or more modules or units corresponding to the foregoing function, for example, a display module or unit and a detection module or unit.

According to a third aspect, this application provides an electronic device, including a foldable screen, one or more sensors, one or more processors, one or more memories, and one or more computer programs. The processor is coupled to the sensor, the foldable screen, and the memory. The one or more computer programs are stored in the memory. When the electronic device runs, the processor executes the one or more computer programs stored in the memory, so that the electronic device performs the screen display control method according to any possible implementation of the foregoing aspect.

According to a fourth aspect, this application provides a computer storage medium, including computer instructions. When the computer instructions are run on an electronic device, the electronic device is enabled to perform the screen display control method according to any possible implementation of the foregoing aspect.

According to a fifth aspect, this application provides a computer program product. When the computer program product is run on an electronic device, the electronic device is enabled to perform the screen display control method according to any possible implementation of the foregoing aspect.

### BRIEF DESCRIPTION OF DRAWINGS

FIG. 1 is a schematic diagram of a structure of an electronic device according to an embodiment of this application;
FIG. 2 is a schematic diagram 1 of division of display areas of a screen of a foldable electronic device according to an embodiment of this application;
FIG. 3 is a schematic diagram 2 of division of display areas of a screen of a foldable electronic device according to an embodiment of this application;
FIG. 4 is schematic diagrams of division of physical forms of a foldable electronic device according to an embodiment of this application;
FIG. 5 is a block diagram 1 of a software structure of a foldable electronic device according to an embodiment of this application;
FIG. 6 is a block diagram 2 of a software structure of a foldable electronic device according to an embodiment of this application;
FIG. 7(a) and FIG. 7(b) are a schematic diagram 1 of graphical user interfaces for enabling a screen switching function according to an embodiment of this application;
FIG. 8(a) to FIG. 8(c) are a schematic diagram 2 of graphical user interfaces for enabling a screen switching function according to an embodiment of this application;
FIG. 9 is a schematic diagram 1 of graphical user interfaces for prompting a user to perform screen binding according to an embodiment of this application;
FIG. 10 is a schematic diagram 2 of graphical user interfaces for prompting a user to perform screen binding according to an embodiment of this application;
FIG. 11 is a schematic diagram 1 of a scenario of a screen display control method according to an embodiment of this application;
FIG. 12 is a schematic diagram 2 of a scenario of a screen display control method according to an embodiment of this application;
FIG. 13 is a schematic diagram 3 of a scenario of a screen display control method according to an embodiment of this application;
FIG. 14 is a schematic diagram 4 of a scenario of a screen display control method according to an embodiment of this application;
FIG. 15(a) to FIG. 15(d) are a schematic diagram 5 of a scenario of a screen display control method according to an embodiment of this application;
FIG. 16 is a schematic diagram 6 of a scenario of a screen display control method according to an embodiment of this application;
FIG. 17 is a schematic diagram 7 of a scenario of a screen display control method according to an embodiment of this application;
FIG. 18(a) to FIG. 18(d) are a schematic diagram 8 of a scenario of a screen display control method according to an embodiment of this application;
FIG. 19(a) to FIG. 19(d) are a schematic diagram 9 of a scenario of a screen display control method according to an embodiment of this application;
FIG. 20 is a schematic flowchart of a screen display control method according to an embodiment of this application; and
FIG. 21 is a schematic diagram of a structure of an electronic device according to an embodiment of this application.

### DESCRIPTION OF EMBODIMENTS

The following describes implementations of embodiments in detail with reference to accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of' means two or more than two.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features.

A screen display control method provided in embodiments of this application may be performed by an electronic device having a flexible screen, such as, a mobile phone, a tablet computer, a notebook computer, an ultra-mobile personal computer (ultra-mobile personal computer, UMPC), a handheld computer, a netbook, a personal digital assistant (personal digital assistant, PDA), a wearable device, or a virtual reality device. This is not limited in embodiments of this application.

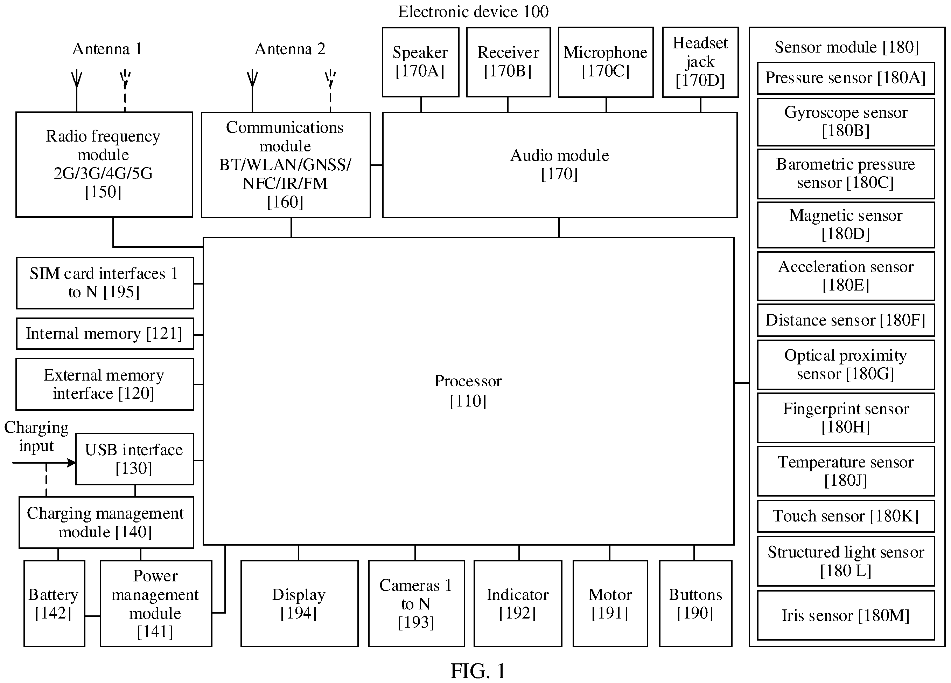

FIG. 1 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a radio frequency module 150, a communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the electronic device 100. In some other embodiments of this application, the electronic device 100 may include more or fewer components than the components shown in the figure, some components may be combined, or some components may be split, or different component arrangements may be used. The components shown in the figure may be implemented through hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). The controller may be a nerve center and a command center of the electronic device 100. The controller may generate an operation control signal based on instruction operation code and a time sequence signal, to complete control of instruction reading and instruction execution. The memory may be further disposed in the processor 110, and is configured to store instructions and data. In some embodiments, the processor 110 may include one or more interfaces.

The charging management module 140 is configured to receive a charging input from a charger.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the communications module 160, and the like.

A wireless communication function of the electronic device 100 may be implemented by the antenna 1, the antenna 2, the radio frequency module 150, the communications module 160, the modem processor, the baseband processor, and the like.

The antenna 1 and the antenna 2 are configured to transmit and receive electromagnetic wave signals. In some other embodiments, the antenna may be used in combination with a tuning switch. The radio frequency module 150 may provide a solution that is applied to the electronic device 100 and that includes wireless communications technologies such as 2G, 3G, 4G, and 5G. The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The communications module 160 may be one or more components integrating at least one communication processor module. The communications module 160 receives an electromagnetic wave through the antenna 2, performs frequency modulation and filtering processing on an electromagnetic wave signal, and sends a processed signal to the processor 110. The communications module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the radio frequency module 150, and the antenna 2 is coupled to the communications module 160, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), Long Term Evolution (long term evolution, LTE), new radio (new radio, NR) in a 5th generation (5th generation, 5G) mobile communications system, a future mobile communications system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute program instructions to generate or change display information. Optionally, the display 194 may include a display and a touch panel. The display is configured to output display content to the user, and the touch panel is configured to receive a touch event entered by the user on the flexible display 194.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or more displays 194.

In some embodiments, when the display panel is made of a material such as an OLED, an AMOLED, or an FLED, the display 194 shown in FIG. 1 may be folded. Herein, that the display 194 may be folded means that the display may be folded to any angle at any part and may be maintained at the angle. For example, the display 194 may be folded left and right in the middle, or may be folded up and down in the middle. In this application, the display that can be folded is referred to as a foldable display. The foldable display may include one screen, or may be a display formed by combining a plurality of screens. This is not limited herein. In some embodiments, the display 194 of the electronic device 100 may be a flexible display.

For an electronic device configured with a foldable display, the foldable display of the electronic device may be switched between a small screen in a folded form and a large screen in an expanded form at any time.

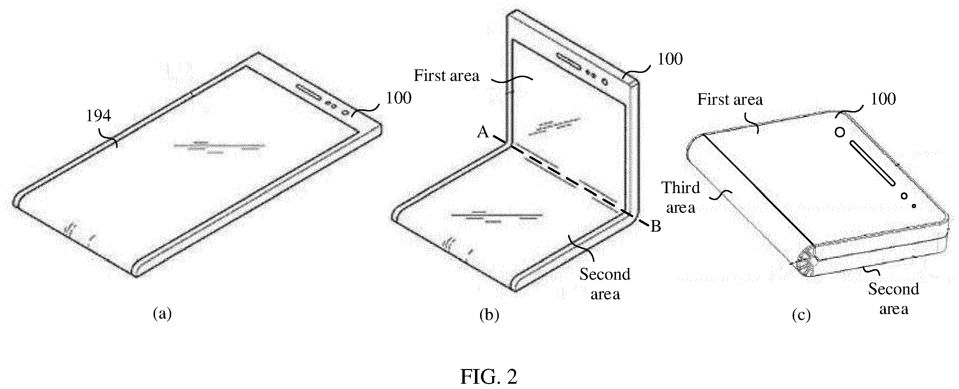

A mobile phone is used as an example. As shown in (a) in FIG. 2, the display 194 in an expanded form may be used as a complete display area for displaying. The user may fold the screen along one or more folding lines in the display 194. A location of the folding line may be preset, or may be randomly selected by the user on the display 194.

As shown in (b) in FIG. 2, after the user folds the display 194 along a folding line AB on the display 194, the display 194 may be divided into two areas along the folding line AB, that is, a first area and a second area. In embodiments of this application, the first area and the second area that are obtained after folding may be used as two independent display areas for displaying. For example, the first area may be referred to as a primary screen of the mobile phone 100, and the second area may be referred to as a secondary screen of the mobile phone 100. Display sizes of the primary screen and the secondary screen may be the same or different.

It should be noted that, after the user folds the flexible display 194 along the folding line AB, the first area and the second area may be disposed opposite to each other, or the first area and the second area may be disposed back to back. As shown in (c) in FIG. 2, after the user folds the display 194, the first area and the second area are disposed back to back. In this case, both the first area and the second area are exposed to the external environment. The user may use the first area for displaying, or may use the second area for displaying, or may use both the first area and the second area for displaying.

In some embodiments, as shown in (c) in FIG. 2, after the user folds the display 194, a bent screen (which may also be referred to as a side screen) may also be used as an independent display area. In this case, the display 194 may be divided into three independent areas: the first area, the second area, and a third area.

It should be understood that the folded line AB may alternatively be distributed horizontally, and the display 194 may be folded up and down. In other words, the first area and the second area of the display 194 may correspond to upper and lower sides of the middle folding line AB. In this application, an example in which the first area and the second area are distributed left and right is used for description.

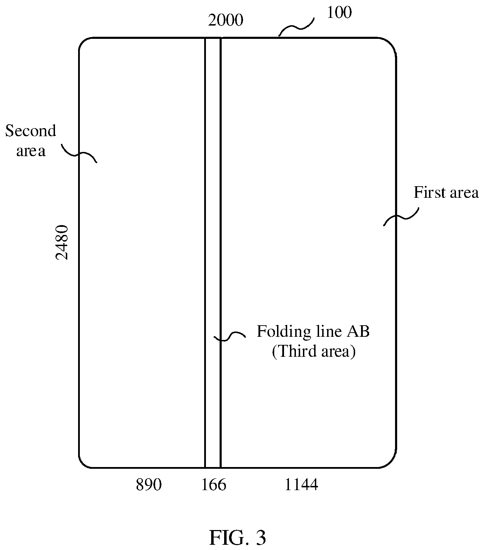

For example, as shown in FIG. 3, a size of the display 194 is 2200^{∗}2480 (unit: pixel). A width of the folding line AB on the display 194 is 166. After the display 194 is folded along the folding line AB, an area with a size of 1144^{∗}2480 on the right side of the display 194 is used as the first area, and an area with a size of 890^{∗}2480 on the left side of the flexible display 194 is used as the second area. In this case, the folding line AB with a size of 166^{∗}2480 may be used as the third area. It should be understood that the folding line in this specification is merely used for ease of understanding, and the folding line may also be a folding band, a boundary line, a boundary band, or the like. This is not limited in this specification. The first area, the second area, and the third area in embodiments of this application may also be referred to as a primary screen, a secondary screen, and a side screen. It should be noted that names of the primary screen and the secondary screen are only used to distinguish between display areas on two sides of a folding line, and do not indicate primary and secondary or importance of the screens. The primary screen and the secondary screen may also be respectively referred to as a first screen and a second screen, and the like.

Embodiments of this application provide a method for controlling display on the first area and the second area. The third area may be independently used for display, or may be used for display following the first area or the second area, or may not be used for display. This is not specifically limited in embodiments of this application.

Because the display 194 can be folded, a physical form of the electronic device may also change accordingly. For example, when the display 194 is fully expanded, a physical form of the electronic device may be referred to as an expanded form. When a part of an area of the display 194 is folded, a physical form of the electronic device may be referred to as a folded form. It may be understood that, in the following embodiments of this application, a physical form of the display 194 may refer to a physical form of the electronic device.

After the user folds the display 194, there is an included angle between the first area and the second area that are obtained by division.

In some embodiments, based on a size of the included angle between the first area and the second area, the display 194 of the electronic device may include at least three physical forms: an expanded form, a folded form, and a half-folded form (or referred to as a support form) in which the display is folded at a specific angle.

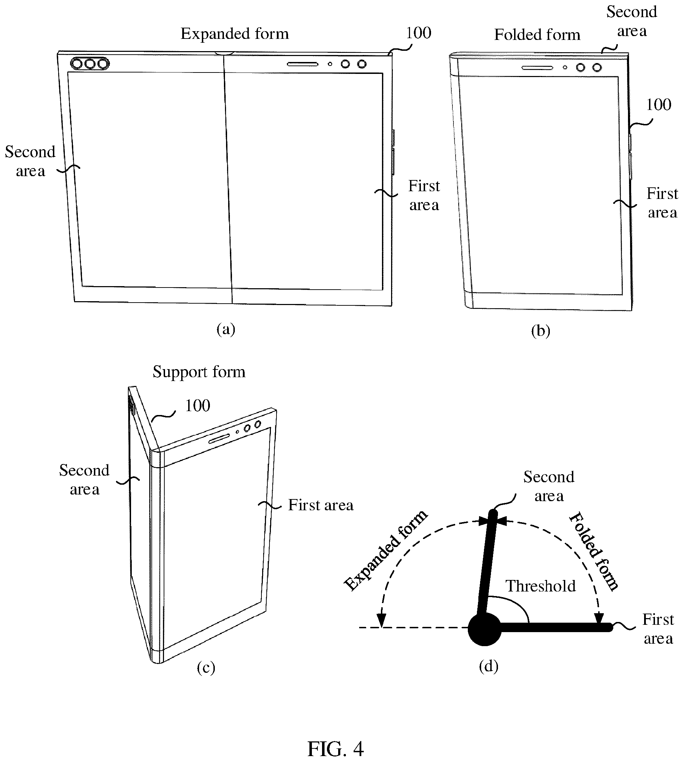

Expanded form: When the display 194 is in the expanded form, the display 194 may be shown in (a) in FIG. 4. Specifically, when the display 194 is in the expanded form, the included angle between the first area and the second area is a first angle ε, where a₁ ≤ ε ≤ 180 degrees, and a₁ is greater than or equal to 90 degrees and less than 180 degrees. For example, a₁ may be 90 degrees. For example, (a) in FIG. 4 shows a form when the first angle ε is 180 degrees.

Folded form: When the display 194 is in the folded form, the display 194 may be shown in (b) in FIG. 4. Specifically, when the display 194 is in the folded form, the included angle between the first area and the second area is a second angle α, where 0° ≤ α < a₂, and a₂ is less than or equal to 90 degrees and greater than or equal to 0 degrees. For example, a₂ may be 25 degrees.

Support form: When the display 194 is in the folded form, the display 194 may be shown in (c) in FIG. 4. Specifically, when the display 194 is in the support form, the included angle between the first area and the second area is a third angle β, where a₂ ≤ β≤ a₁, a₂ is less than or equal to 90 degrees and greater than or equal to 0 degrees, and a₁ is greater than or equal to 90 degrees and less than 180 degrees. For example, a₁ may be 155 degrees, and a₂ may be 25 degrees.

In addition, the support form of the display 194 may further include an unstable support form and a stable support form. In the stable support form, a range of the second angle β is a₄ ≤ β ≤ a₃, a₄ is less than or equal to 90 degrees, and a₃ is greater than or equal to 90 degrees and less than 180 degrees. In the support form of the display 194, a form other than the stable support form is the unstable support form of the display 194.

In some other embodiments, a physical form of the display 194 may be divided into only a folded form and an expanded form. As shown in (d) in FIG. 4, when the included angle between the first area and the second area is greater than a threshold (for example, 45° or 60°), the mobile phone 100 may determine that the display 194 is in the expanded form. When the included angle between the first area and the second area is less than the threshold, the mobile phone 100 may determine that the display 194 is in the folded form.

It should be understood that division of physical forms of the display 194 and a definition of each physical form are not limited in this application.

The sensor module 180 may include one or more of a pressure sensor, a gyroscope sensor, a barometric pressure sensor, a magnetic sensor (for example, a Hall effect sensor), an acceleration sensor, a distance sensor, an optical proximity sensor, a fingerprint sensor, a structured light sensor, an iris sensor, a temperature sensor, a touch sensor, an ambient light sensor, a bone conduction sensor, and the like. This is not limited in embodiments of this application.

The pressure sensor is configured to sense a pressure signal, and may convert the pressure signal into an electrical signal. When a touch operation is performed on the display 194, the electronic device 100 detects a strength of the touch operation based on the pressure sensor. The electronic device 100 may also calculate a touch position based on a detection signal of the pressure sensor.

The gyroscope sensor may be configured to determine a motion posture of the electronic device 100. In embodiments of this application, a gyroscope sensor on each screen may also determine the included angle between the first area and the second area after the electronic device 100 is folded, to determine a physical form of the electronic device 100.

The fingerprint sensor is configured to collect a fingerprint. The electronic device 100 may use a feature of the collected fingerprint to implement fingerprint-based unlocking, application lock access, fingerprint-based photographing, fingerprint-based call answering, and the like. In embodiments of this application, the electronic device 100 may collect fingerprint information of users in the first area and the second area by using fingerprint sensors, to determine a user that currently uses a screen on this side.

The structured light sensor may be configured to collect face information of the user. The electronic device 100 may use the collected face information to implement face-based unlocking, application lock access, photo beautification, and the like. In embodiments of this application, the electronic device 100 may collect face information of users in the first area and the second area by using structured light sensors, to determine a user that currently uses a screen on this side.

The iris sensor may be configured to collect iris information of the user. The electronic device 100 may use the collected iris information to implement iris-based unlocking, application lock access, iris-based photographing, and the like. In embodiments of this application, the electronic device 100 may collect iris information of users in the first area and the second area by using iris sensors, to determine a user that currently uses a screen on this side.

The touch sensor is also referred to as a "touch panel". The touch sensor may be disposed on the display 194, and the touch sensor and the display 194 form a touchscreen, which is also referred to as a "touchscreen". The touch sensor is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor may be alternatively disposed on a surface of the electronic device 100, and is at a position different from that of the display 194.

It should be understood that the foregoing merely shows some sensors in the electronic device 100 and functions of the sensors. The electronic device may include more or fewer sensors. For example, the electronic device 100 may further include an acceleration sensor, a gravity sensor, and the like. In embodiments of this application, a foldable electronic device may include a first area and a second area that form a particular angle in a foldable form. The electronic device may determine a folding direction of the electronic device and an included angle between the first area and the second area by using an acceleration sensor and a gravity sensor after folding.

The electronic device 100 can implement a photographing function by using the ISP, the camera 193, the video codec, the GPU, the display 194, the application processor, and the like.

The ISP is configured to process data fed back by the camera 193. In some embodiments, the ISP may be disposed in the camera 193. The camera 193 is configured to capture a static image or a video. In some embodiments, the electronic device 100 may include one or N cameras 193, where N is a positive integer greater than 1. The digital signal processor is configured to process a digital signal, and may process another digital signal in addition to a digital image signal.

The video codec is configured to compress or decompress a digital video. The mobile phone 100 may support one or more video codecs.

The external memory interface 120 may be configured to connect to an external storage card such as a micro SD card, to extend a storage capability of the mobile phone 100. The internal memory 121 may be configured to store computer-executable program code. The executable program code includes instructions.

The processor 110 performs various function applications and data processing of the electronic device 100 by running the instructions stored in the internal memory 121. The internal memory 121 may include a program storage area and a data storage area. The program storage area may store an operating system, an application required by at least one function (for example, a sound playing function and an image playing function), and the like. The data storage area may store data (such as audio data and a phone book) and the like created during use of the mobile phone 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing and recording through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to produce an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. In some embodiments, the electronic device 100 uses an eSIM, namely, an embedded SIM card. The eSIM card may be embedded in the electronic device 100, and cannot be separated from the electronic device 100.

A layered architecture, an event-driven architecture, a micro-core architecture, a micro-service architecture, or a cloud architecture may be used for a software system of the electronic device 100. It should be understood that the method for establishing a connection between devices provided in embodiments of this application is applicable to systems such as Android and iOS, and the method has no dependency on a system platform of a device. In embodiments of this application, an Android system with a layered architecture is used as an example to describe a software structure of the electronic device 100.

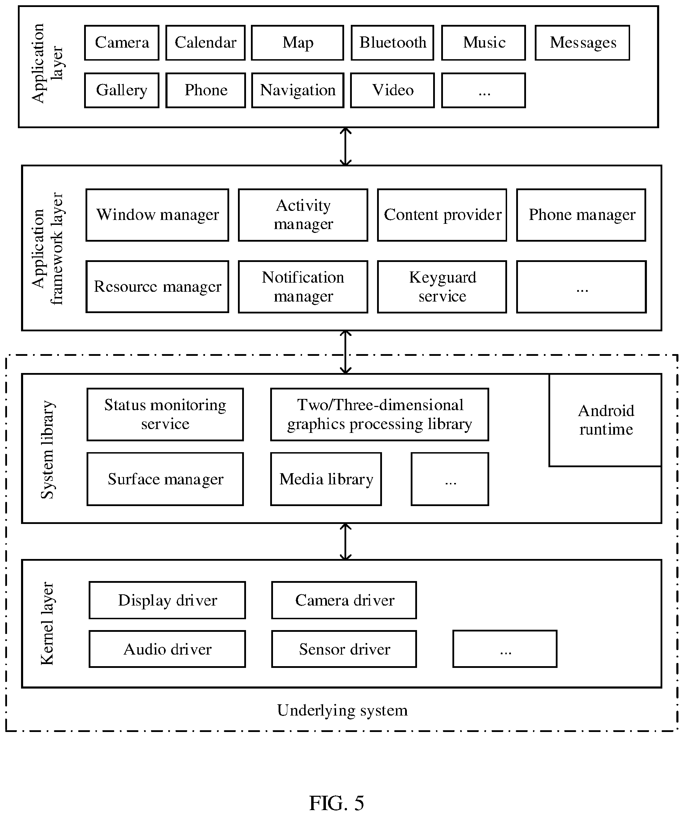

FIG. 5 is a block diagram of the software structure of the electronic device 100 according to an embodiment of this application.

In the layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

The application layer may include a series of application packages. As shown in FIG. 5, applications such as Camera, Gallery, Calendar, Phone, Map, Navigation, Bluetooth, Music, Videos, and Messages may be installed in the application layer.

The application framework layer provides an application programming interface (application programming interface, API) and a programming framework for an application at the application layer. The application framework layer includes some predefined functions. As shown in FIG. 5, the application framework layer may include a window manager (window manager) and a keyguard service (keyguard service). Certainly, the application framework layer may further include an activity manager, a content provider, a view system, a phone manager, a resource manager, a notification manager, a display policy service, a display management service, and the like. This is not limited in embodiments of this application.

The keyguard service may be used to obtain, from an underlying display system, user identification information detected on the first area side and user identification information detected on the second area side. Further, the keyguard service may generate or update, based on the obtained user identification information, a binding relationship stored in a directory of the keyguard service, and determine specific content displayed in the first area and the second area. Further, the keyguard service may display, in the first area and the second area by using the window manager, content corresponding to the user identification information detected on the sides.

The binding relationship may be a correspondence between user identification information, screen content, and a display area. The user identification information is information that can uniquely determine a user identity. For example, the user identification information may be face information of a user collected by the structured light sensor, fingerprint information of a user collected by the fingerprint sensor, or iris information of a user collected by the iris sensor.

The system library, the kernel layer, and the like below the application framework layer may be referred to as an underlying system. The underlying system includes the underlying display system, configured to provide a display service. For example, the underlying display system includes a display driver at the kernel layer and a surface manager in the system library.

The Android runtime includes a core library and a virtual machine. The Android runtime is responsible for scheduling and management of the Android system.

The kernel library includes two parts: a function that needs to be called in Java language, and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video coding formats such as MPEG-4, G.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, a sensor driver, and the like. This is not limited in embodiments of this application.

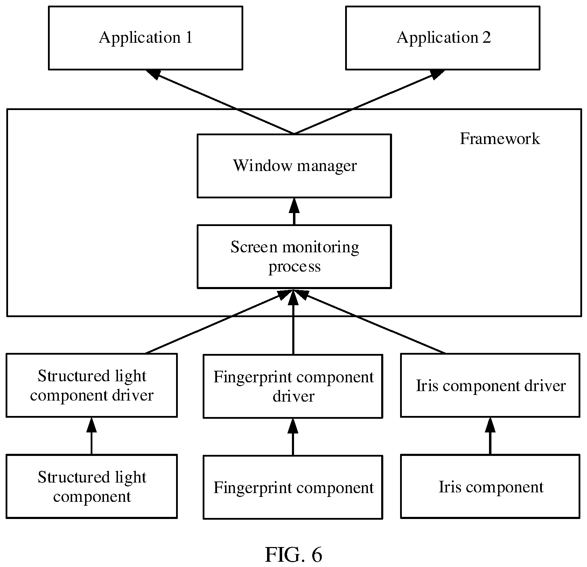

FIG. 6 is a framework diagram of a technical solution applicable to an embodiment of this application. As shown in FIG. 6, a screen monitoring process is started when an electronic device is in a support form or a folded form, and the electronic device controls, by using a window manager based on user identification information collected by a structured light component, a fingerprint component, and an iris component, display on screens on two sides of the electronic device. The structured light component may be the foregoing structured light sensor, the fingerprint component may be the foregoing fingerprint sensor, and the iris component may be the foregoing iris sensor.

For ease of understanding, in the following embodiments of this application, a mobile phone having the structures shown in FIG. 1 to FIG. 5 is used as an example to describe in detail, with reference to the accompanying drawings and application scenarios, a screen display control method provided in embodiments of this application.

As described in the background, because a foldable electronic device has usable areas on two sides, a user may change a used display area. Currently, when the user changes from facing one display area to facing the other display area for viewing, content currently viewed by the user is still displayed in the original display area. This is inconvenient for the user to view and operate.

In embodiments of this application, when the electronic device is in a support form or a folded form, a display includes at least two areas, and the two areas may display content of different applications. The electronic device may bind applications corresponding to the two areas to user identification information collected by using the sensor module, to display, in an area currently used by the user, content that matches the user. This implements "a screen change following a user", and is convenient for the user to view and operate.

For example, when the electronic device is in the folded form, the display is divided into a first area and a second area shown in (b) in FIG. 4. The user enters user identification information in the first area in advance, and the electronic device binds the detected user identification information to a first application. The first application may be an application displayed in full screen in the first area, or may be an application selected by the user from a plurality of applications currently displayed in the first area. This is not specifically limited in embodiments of this application. After the user changes from facing the first area to facing the second area, a second sensor corresponding to the second area collects the user identification information of the user, and the electronic device may continue to display an interface of the first application in the second area.

For another example, when the electronic device is in the support form, the display is divided into a first area and a second area shown in (c) in FIG. 4. A user 1 enters user identification information in the first area in advance, and a user 2 enters user identification information in the second area in advance. The electronic device binds first user identification information detected in the first area to a first application, and binds second user identification information detected in the second area to a second application. The first application may be an application displayed in full screen in the first area, or may be an application selected by the user 1 from a plurality of applications displayed in the first area. Similarly, the second application may be an application displayed in full screen in the second area, or may be an application selected by the user 2 from a plurality of applications currently displayed in the second area. This is not specifically limited in embodiments of this application. Then, the user 1 and the user 2 exchange locations or the electronic device rotates. That is, the user 1 faces the second area, and the user 2 faces the first area. The second user identification information is collected in the first area, and the first user identification information is collected in the second area. In this case, the electronic device may continue to display an interface of the first application in the second area, and continue to display an interface of the second application in the first area.

The technical solutions in embodiments of this application may be used in a scenario in which the electronic device is used in split-screen mode, for example, a scenario in which the electronic device is in the folded form or the support form. The following describes the technical solutions in embodiments in this application in detail with reference to accompanying drawings.

In some embodiments, if a user wants to use a screen switching function, the user needs to set an electronic device in advance.

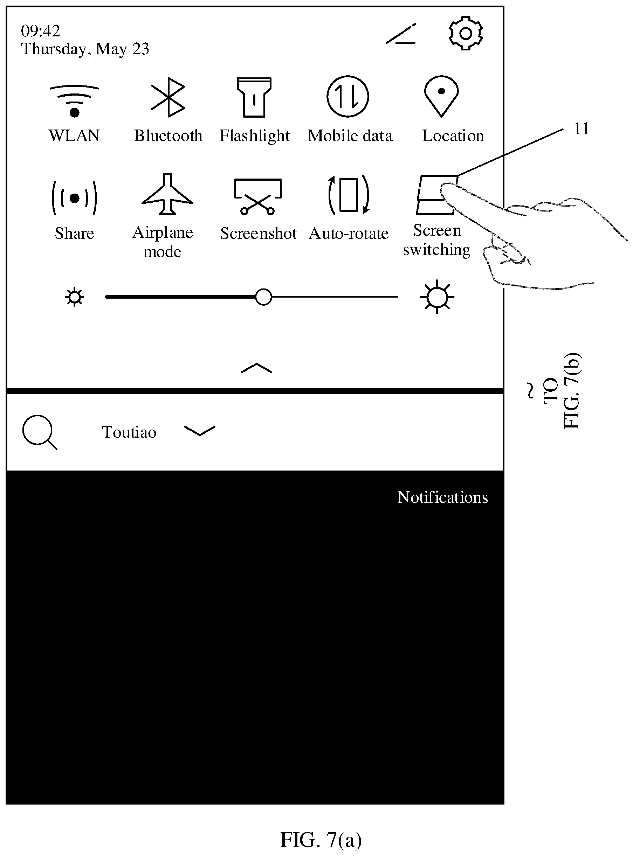

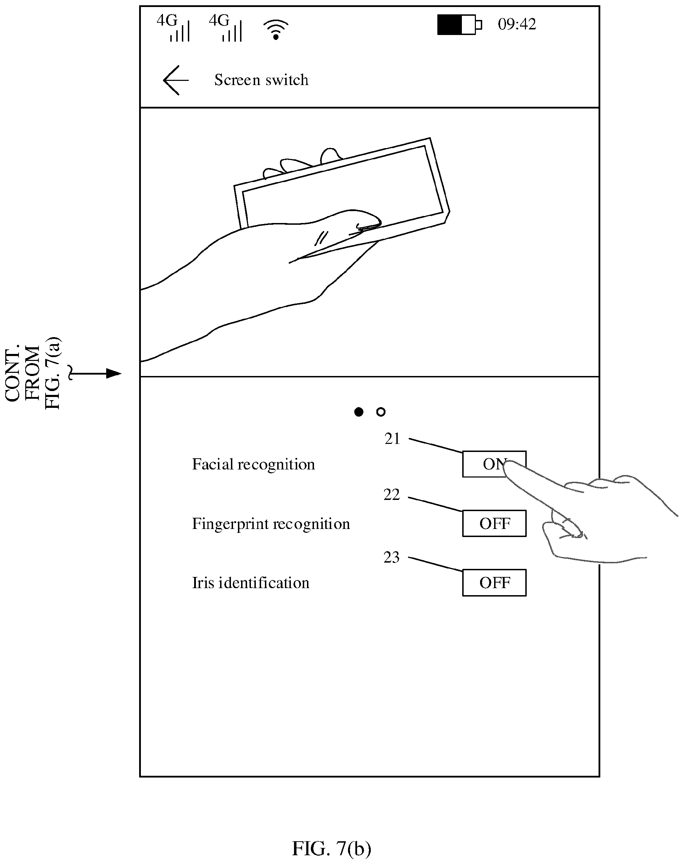

FIG. 7(a) and FIG. 7(b) are schematic diagrams of a group of graphical user interfaces (graphical user interface, GUI) for enabling a screen switching function according to an embodiment of this application.

FIG. 7(a) shows a notification management interface of a mobile phone. The interface displays a plurality of shortcut setting icons, for example, a WLAN icon, a Bluetooth icon, a flashlight icon, a mobile data icon, a location icon, a share icon, an airplane mode icon, a screenshot icon, an auto-rotation icon, and a screen switching icon. The user taps a screen switching icon 11, and the electronic device enters a screen switching setting interface shown in FIG. 7(b). The user may tap an enabling control 21, 22, or 23 on the screen switching setting interface, to enable a corresponding screen switching manner. For example, the user taps the enabling control 21 corresponding to facial recognition. When the enabling control 21 displays ON, the electronic device 100 may control, based on collected face information, switching of display interfaces of the first area and the second area. Similarly, when the enabling control 22 corresponding to fingerprint recognition displays ON, the electronic device 100 may control, based on collected fingerprint information, switching of display interfaces of the first area and the second area. When the enabling control 23 corresponding to iris recognition displays ON, the electronic device 100 may control, based on collected iris information, switching of display interfaces of the first area and the second area.

It should be understood that the foregoing interfaces may include more or fewer setting icons. This is not specifically limited in embodiments of this application.

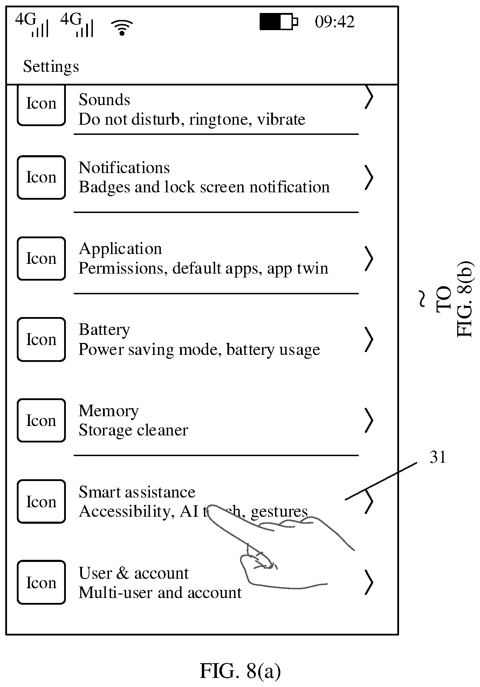

FIG. 8(a) to FIG. 8(c) are schematic diagrams of a group of GUIs for enabling a screen switching function according to another embodiment of this application.

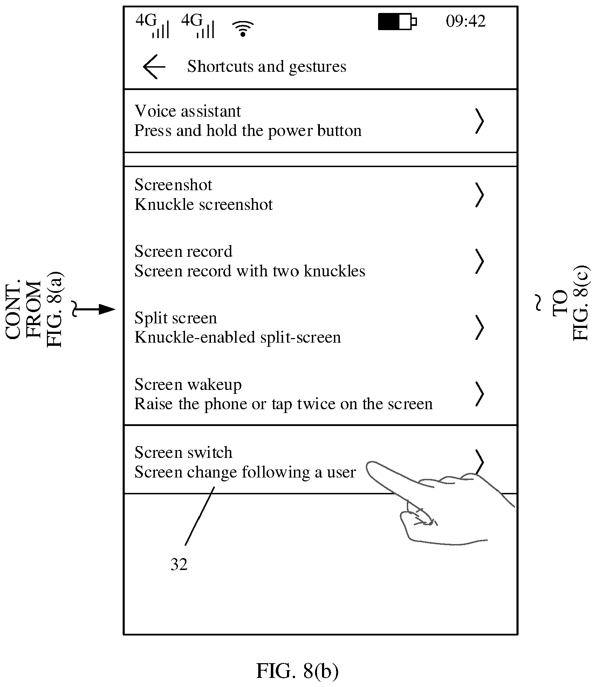

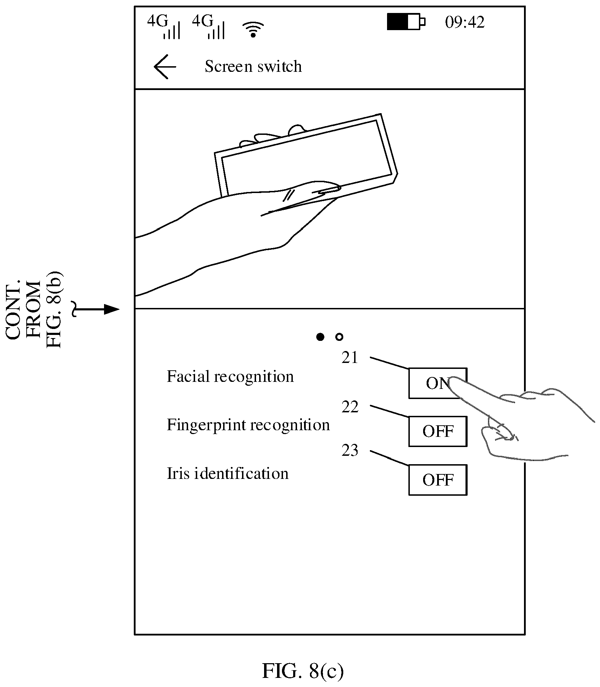

FIG. 8(a) shows a main setting interface of a mobile phone. The interface displays a plurality of setting options, for example, a notification center option, an application option, a battery option, a storage option, a smart assistance option, a user and account option. A user taps an intelligent assistance option 31, and the electronic device enters a shortcut startup and gesture setting interface shown in FIG. 8(b). The interface displays a plurality of setting options, for example, a voice assistant option, a screenshot option, a screen recording option, a split-screen option, a screen-on option, and a screen switching option. The user taps a screen switching option 32, and the electronic device enters a screen switching setting interface shown in FIG. 8(c). The user may tap an enabling control 21, 22, or 23 on the screen switching setting interface, to enable a corresponding screen switching manner. For example, the user taps the enabling control 21 corresponding to facial recognition. When the enabling control 21 displays ON, the electronic device 100 may control, based on collected face information, switching of display interfaces of the first area and the second area. Similarly, when the enabling control 22 corresponding to fingerprint recognition displays ON, the electronic device 100 may control, based on the collected fingerprint information, switching of display interfaces of the first area and the second area. When the enabling control 23 corresponding to iris recognition displays ON, the electronic device 100 may control, based on collected iris information, switching of display interfaces of the first area and the second area.

It should be understood that the foregoing interfaces may include more or fewer setting icons or options. This is not specifically limited in embodiments of this application.

In some embodiments, the user may simultaneously enable a plurality of the screen switching manners shown in FIG. 7(b) or FIG. 8(c). That is, the electronic device may simultaneously control display on the screen based on a plurality of types of collected user identification information. For example, when the enabling controls 21 and 22 display ON, the electronic device 100 may control switching of the display interfaces of the first area and the second area based on collected face information and fingerprint information.

It may be understood that the interfaces shown in FIG. 7(a) and FIG. 7(b) and FIG. 8(a) to FIG. 8(c) may be displayed in the first area, or displayed in the second area, or displayed in both the first area and the second area of the foldable electronic device. This is not specifically limited in embodiments of this application.

It may be understood that the user may perform the setting operation before using the electronic device in split-screen mode, or may perform the setting operation on a screen on one side when using the electronic device in split-screen mode. This is not specifically limited in embodiments of this application.

When the electronic device is in the support form or the folded form, the electronic device may automatically start a screen switching process. A manner of determining a form of the electronic device by the electronic device is not specifically limited in embodiments of this application. For example, the electronic device may determine the form of the electronic device based on an included angle between the first area and the second area.

After starting the screen switching process, the electronic device determines whether the electronic device enables a screen switching function.

When determining that the screen switching function of the electronic device is enabled, the electronic device may pop up a selection interface in the first area and/or the second area of the display, to prompt the user to perform screen binding.

In some embodiments, the electronic device may automatically pop up a selection interface, to prompt the user to perform screen binding.

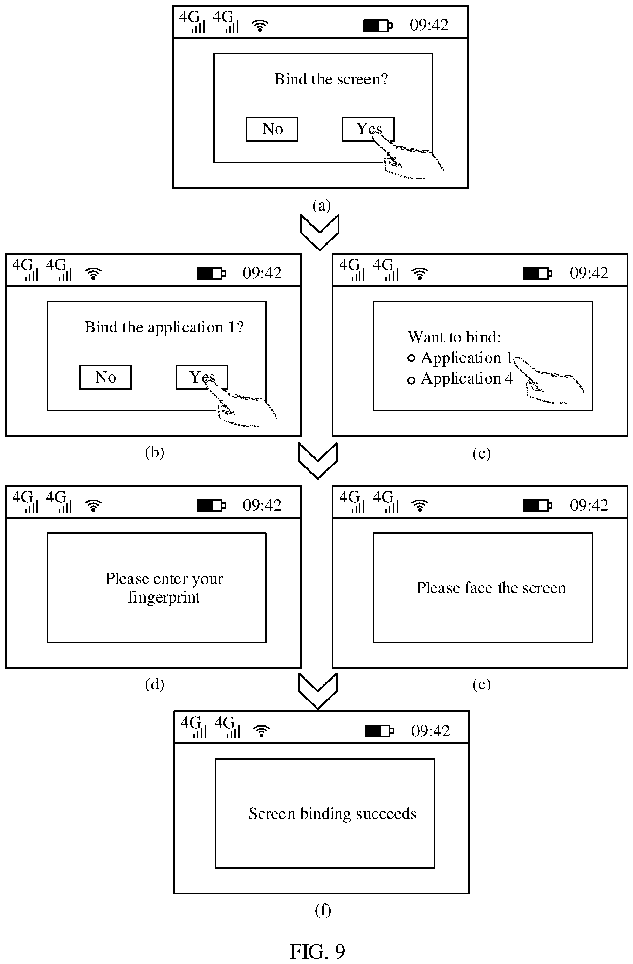

In an example, when detecting that only one application is displayed in the first area, the electronic device automatically pops up a selection interface in the first area; and/or when detecting that only another application is displayed in the second area, the electronic device automatically pops up a selection interface in the second area, to prompt the user to perform screen binding. For example, when the electronic device detects that an application 1 is displayed in full screen in the first area, the electronic device automatically pops up a selection interface in the first area; and/or when the electronic device detects that an application 2 is displayed in full screen in the second area, the electronic device automatically pops up a selection interface in the second area. For example, the application 1 is displayed in full screen in the first area, the electronic device may pop up a selection interface shown in (a) in FIG. 9. The user may tap "Yes", to indicate the electronic device to control a sensor corresponding to the first area to start to detect user identification information; or the user may tap "No", to indicate the electronic device not to start to detect user identification information. When the user taps "Yes", a selection interface shown in (b) in FIG. 9 may be displayed in the first area. The user may tap "Yes" to confirm that the user wants to bind the application 1, or the user may tap "No" to give up binding the application 1. When the user taps the option "Yes" in (b) in FIG. 9, the first area may display a prompt window to prompt the user to enter fingerprint information, face information, or iris information. For example, the first area may display a prompt window shown in (d) or (e) in FIG. 9. After viewing the prompt window, the user may complete a corresponding action. After collecting the fingerprint information, the face information, or the iris information, the electronic device generates a binding relationship between user identification information, screen content, and a display area. For example, the binding relationship may be in a form of a table shown in Table 1. The first row in Table 1 indicates that first user identification information is detected in the first area, the first user identification information is bound to the application 1, and the application 1 is an application currently displayed in full screen in the first area.

Similar to the first area, when the application 2 is displayed in full screen in the second area, a user 2 facing the second area may also be prompted to perform screen binding. The electronic device may generate a binding relationship shown in the second row in Table 1. The second row in Table 1 indicates that second user identification information is detected in the second area, the second user identification information is bound to the application 2, and the application 2 is an application currently displayed in full screen in the second area.

After the foregoing binding process is completed, the first area and/or the second area may display a prompt window shown in (f) in FIG. 9, to notify the user that the screen binding is completed.

**Table 1**

| User identification information | Area | Display content |
|---|---|---|
| First user identification information | First area | Interface of the application 1 |
| Second user identification information | Second area | Interface of the application 2 |

It should be noted that the electronic device may directly display the interface shown in (b) in FIG. 9 instead of popping up the interface shown in (a) in FIG. 9.

In another example, when determining that the screen switching function of the electronic device is enabled, the electronic device may automatically pop up the selection interface shown in (a) in FIG. 9 in the first area and/or the second area, to prompt the user to perform screen binding. When the user taps "Yes", the first area may display all currently bondable applications. For example, a selection interface shown in (c) in FIG. 9 is displayed in the first area. The selection interface displays a list of currently bondable applications (for example, the application 1 and an application 4) to the user. The user may tap a corresponding application, to indicate the electronic device to bind the selected application. After detecting the selection operation of the user, the electronic device may subsequently pop up (d)-(f) in FIG. 9 or (e) and (f) in FIG. 9. The second area is similar to the first area, and details are not described again. Finally, the electronic device may generate the binding relationships shown in Table 1. The application 1 is an application selected to be bound to a user 1 facing the first area, and the application 2 is an application selected to be bound to the user 2 facing the second area. For (a), (d), (e), and (f) in FIG. 9, refer to the foregoing related descriptions.

In some other embodiments, after receiving a binding instruction of the user, the electronic device may pop up a selection interface, to prompt the user to perform screen binding.

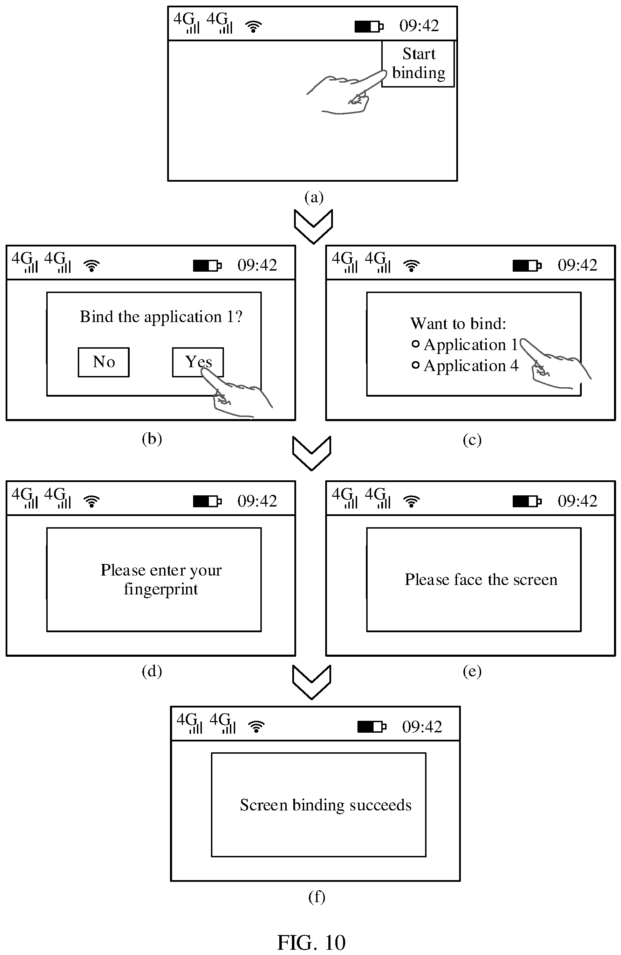

In an example, when determining that the electronic device starts the screen switching process and enables the screen switching function, the electronic device may display a binding button in the first area and/or the second area, and the user may indicate, by using the button, the electronic device to start binding. For example, the electronic device may display a binding start button shown in (a) in FIG. 10, and the user may indicate, by using the binding start button, the electronic device to start screen binding.

For example, after starting, in the first area, an application 1 to be bound, the user 1 may tap the binding start button. After receiving a binding start instruction from the user 1, the electronic device may pop up a selection interface shown in (b) in FIG. 10 in the first area, and may subsequently pop up (d)-(f) in FIG. 10 or (e) and (f) in FIG. 10, to complete binding. The second area is similar to the first area, and details are not described again. Finally, the electronic device may generate the binding relationships shown in Table 1.

For another example, when the electronic device has a plurality of bondable applications in the first area, after receiving a binding start instruction of the user, the electronic device may pop up a selection interface shown in (c) in FIG. 10, and may subsequently pop up (d)-(f) in FIG. 10 or (e) and (f) in FIG. 10, to complete the binding. The second area is similar to the first area, and details are not described again. Finally, the electronic device may generate the binding relationships shown in Table 1. The application 1 is an application selected to be bound to the user 1 facing the first area, and the application 2 is an application selected to be bound to the user 2 facing the second area.

For (b), (c), (d), (e), and (f) in FIG. 10, refer to related descriptions in FIG. 9. Details are not described herein again.

It should be noted that the foregoing screen binding process may alternatively be in another sequence. This is not specifically limited in embodiments of this application. For example, the electronic device may further prompt the user to enter user identification information, and then prompt the user to select a to-be-bound application.

It should be understood that forms of interfaces, windows, prompts, and binding relationships shown in FIG. 9 and FIG. 10 may alternatively be any other forms of interfaces, windows, prompts, and binding relationships. This is not specifically limited in embodiments of this application.

The following describes a screen switching method in embodiments of this application by using the electronic device in the support form as an example.

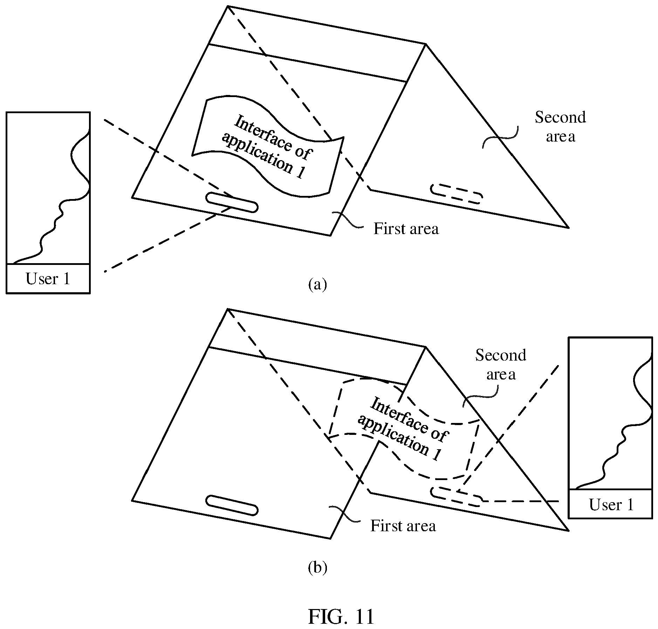

For example, the electronic device controls, based on collected face information, switching of display interfaces of areas on two sides of the display. FIG. 11 is a schematic diagram of screen switching according to an embodiment of this application. As shown in FIG. 11, the electronic device is in the support form, a screen of the electronic device includes a first area and a second area, the first area and the second area face different directions, a structured light sensor is disposed in each of the first area and the second area, and the electronic device may detect face information in the first area and the second area by using the structured light sensors.

After the electronic device enters the support form, the screen switching process is started, and the user 1 may be prompted, in a manner shown in FIG. 9 or FIG. 10, to perform screen binding. The following uses a manner of (a)-(b)-(e)-(f) in FIG. 9 as an example.

As shown in (a) in FIG. 11, initially, the user 1 faces the first area, and the second area is in a screen-off state. After the electronic device enters the support form, the interface shown in (a) in FIG. 9 automatically pops up in the first area. After the user 1 taps the button "Yes", the selection interface shown in (b) in FIG. 9 is displayed in the first area. After the user 1 taps the button "Yes", the prompt window shown in (c) in FIG. 9 is displayed in the first area to prompt the user 1 to face the screen, so as to collect face information of the user 1 in the first area. After collecting the face information of the user 1, the electronic device may generate a binding relationship shown in Table 2, and display the prompt window shown in (f) in FIG. 9, to prompt the user 1 that screen binding is completed. The application 1 is an application currently displayed in full screen in the first area.

**Table 2**

| User identification information | Area | Display content |
|---|---|---|
| First face information | First area | Interface of the application 1 |

As shown in (b) in FIG. 11, the user 1 changes from facing the first area to facing the second area. That is, the user 1 changes a used screen. The electronic device does not detect the face information of the user 1 in the first area, and detects the face information of the user 1 in the second area. The electronic device updates the binding relationship to a binding relationship shown in Table 3.

**Table 3**

| User identification information | Area | Display content |
|---|---|---|
| First face information | Second area | Interface of the application 1 |

The electronic device may control, based on the updated binding relationship, the second area to display the interface of the application 1. In this case, the first area may enter a screen-off state, or may continue to display another interface, for example, a desktop interface. This is not specifically limited in embodiments of this application.

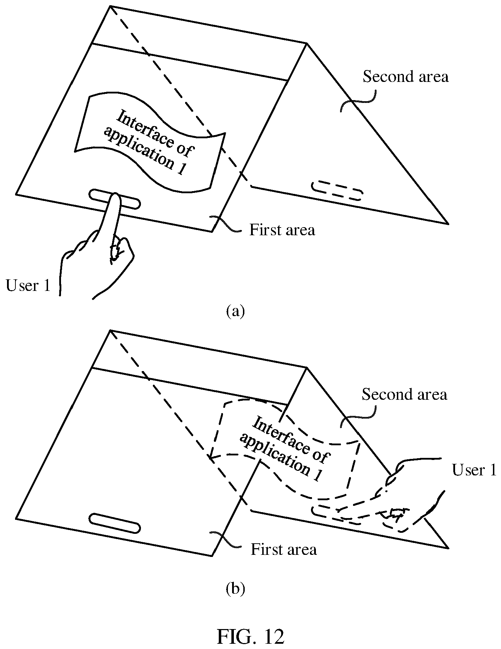

For example, the electronic device controls, based on collected fingerprint information, switching of display interfaces of areas on two sides of the display. FIG. 12 is a schematic diagram of screen switching according to another embodiment of this application. A difference from FIG. 11 lies in that the electronic device detects fingerprint information of users in the first area and the second area, and controls, based on the collected fingerprint information, switching of display interfaces of areas on two sides of the display.

After the electronic device enters the support form, the screen switching process is started, and the user 1 may be prompted, in a manner shown in FIG. 9 or FIG. 10, to perform screen binding.

As shown in (a) in FIG. 12, initially, the user 1 faces the first area, and the second area is in a screen-off state. When screen binding is initially performed, a difference from FIG. 11 lies in that the electronic device displays the prompt window shown in (c) in FIG. 9 in the first area, to prompt the user 1 to enter a fingerprint.

After collecting fingerprint information of the user 1, the electronic device may generate a binding relationship similar to that in Table 2, except that the user identification information is the fingerprint information.

As shown in (b) in FIG. 12, the user 1 changes from facing the first area to facing the second area. That is, the user 1 changes a used screen. After facing the second area, the user may press a finger on the second area. The electronic device detects the fingerprint information of the user 1 in the second area, and updates the binding relationship to the binding relationship shown in Table 3. The electronic device may control, based on the updated binding relationship, the second area to display the interface of the application 1. In this case, the first area may enter a screen-off state, or may continue to display another interface. This is not specifically limited in embodiments of this application.

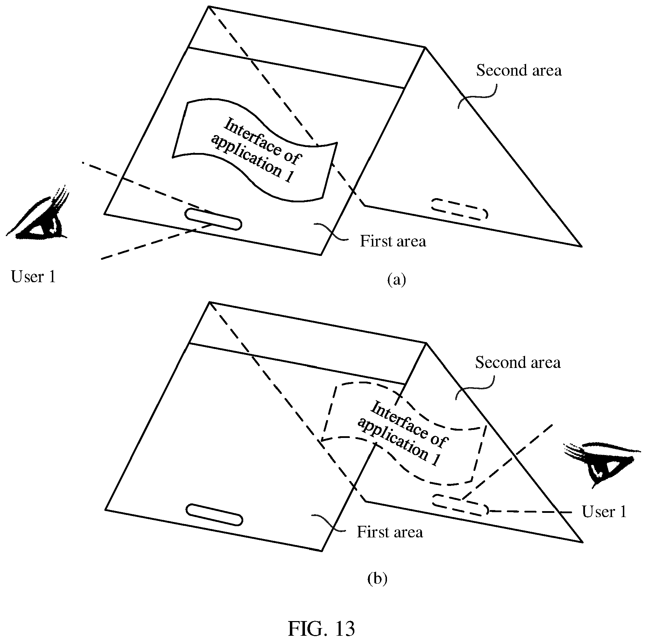

Similar to controlling, based on the collected face information, switching of display interfaces of display areas on two sides of the display, the electronic device may further control, based on collected iris information, switching of display interfaces of areas on two sides of the display. Specifically, as shown in FIG. 13, the electronic device may control, based on iris information of users detected in the first area and the second area, switching of display interfaces of the first area and the second area.

In this way, when a location of the user relative to the electronic device changes, the electronic device may display, on a screen currently used by the user, content associated with the user, and the user does not need to perform an additional operation to perform screen switching. This is convenient for the user to view and operate.

In addition, it should be understood that when same user identification information is detected in both the first area and the second area, the electronic device may switch display of the first area and the second area, or may not switch display of the first area and the second area. This is not specifically limited in embodiments of this application. For example, the user switches, by using two fingers of which fingerprint information is entered in advance, display of the first area and display of the second area of the electronic device.

In this application, when the user performs an operation in the first area or the second area to close an application bound to the user, after detecting the user's operation of closing the application, the electronic device may delete the binding relationship shown in Table 2 or Table 3. In this case, the electronic device may control the first area or the second area to display an interface displayed before the user opens the application 1, or the electronic device may control the first area or the second area to display a specific interface, for example, display a desktop interface.

Further, the user 1 opens the application 2.

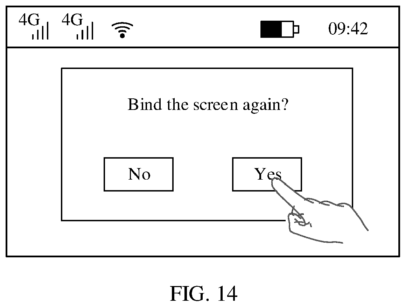

In some embodiments, after the electronic device detects the opening operation, a binding prompt may pop up in the first area or the second area, to prompt the user 1 to perform screen binding again. For example, a prompt window shown in FIG. 14 may pop up in the first area or the second area, to prompt the user 1 to perform screen binding again. The user 1 may tap "Yes", to indicate the electronic device to generate a binding relationship between the user 1 and the application 2, or the user may tap "No", to indicate the electronic device not to perform screen binding again. When the user taps "Yes", the electronic device may generate a binding relationship shown in Table 4 or Table 5.

**Table 4**

| User identification information | Area | Display content |
|---|---|---|
| First user identification information | First area | Interface of the application 2 |

**Table 5**

| User identification information | Area | Display content |
|---|---|---|
| First user identification information | Second area | Interface of the application 2 |

In some other embodiments, the electronic device may automatically perform screen binding again without prompting the user equipment, to generate the binding relationship shown in Table 4 or Table 5.

In this way, even if the user changes an application, "a screen change following a user" can still be implemented, to improve viewing and operation experience of the user.

FIG. 11 to FIG. 14 show a case in which one user uses the foldable electronic device in split-screen mode. The following describes a case in which a plurality of users use the foldable electronic device in split-screen mode. Similarly, the screen switching method in embodiments of this application is described by using the electronic device in the support form as an example.

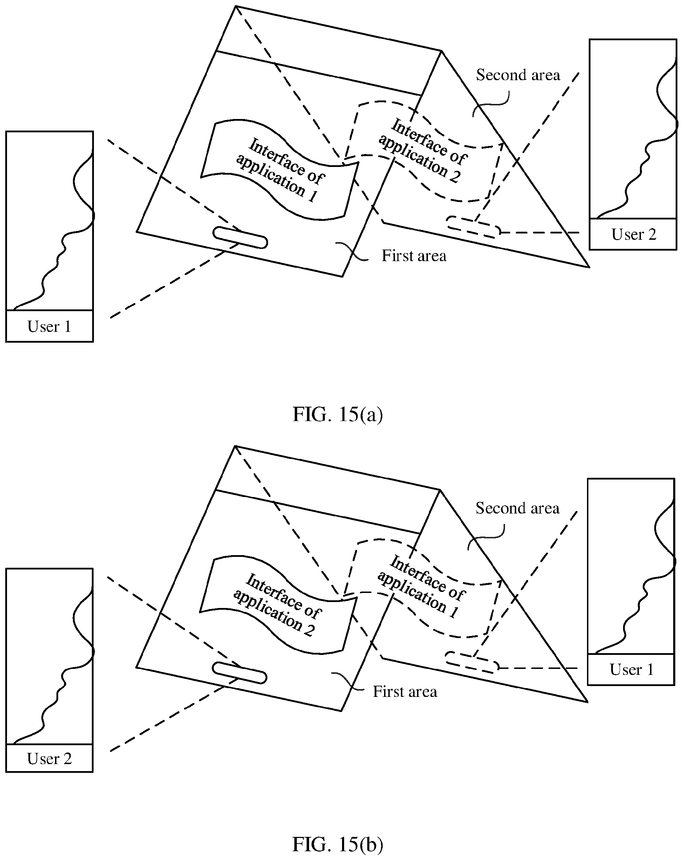

For example, the electronic device controls, based on collected face information, switching of display interfaces of areas on two sides of the display. FIG. 15(a) to FIG. 15(d) are schematic diagrams of screen switching according to another embodiment of this application.

As shown in FIG. 15(a) to FIG. 15(d), the electronic device is in the support form, a screen of the electronic device includes two areas: a first area and a second area, the first area and the second area face different directions, and the electronic device may detect face information in the first area and the second area by using structured light sensors.

After the electronic device enters the support form, the screen switching process is started, and a user 1 and a user 2 may be prompted, in a manner shown in FIG. 9 or FIG. 10, to perform screen binding. The following uses a manner of (a)-(b)-(e)-(f) in FIG. 9 as an example.

As shown in FIG. 15(a), initially, the user 1 faces the first area, and the user 2 faces the second area. After the electronic device enters the support form, the interface shown in (a) in FIG. 9 pops up in the first area and the second area. After the user 1 taps the button "Yes", the selection interface shown in (b) in FIG. 9 is displayed in the first area. After the user 2 taps the button "Yes", the selection interface shown in (b) in FIG. 9 is displayed in the second area. After the user 1 taps the button "Yes", the prompt window shown in (c) in FIG. 9 is displayed in the first area to prompt the user 1 to face the screen, so as to collect face information of the user 1 in the first area. After the user 2 taps the button "Yes", the prompt window shown in (c) in FIG. 9 is displayed in the second area to prompt the user 2 to face the screen, so as to collect face information of the user 2 in the second area. After collecting the face information of the user 1 and the user 2, the electronic device may generate binding relationships shown in Table 6, and display, in the first area and the second area, the prompt window shown in (f) in FIG. 9, to prompt the user 1 and the user 2 that screen binding is completed. In Table 6, an application 1 is an application that is currently displayed in full screen in the first area, and an application 2 is an application that is currently displayed in full screen in the second area.

**Table 6**

| User identification information | Area | Display content |
|---|---|---|
| First face information | First area | Interface of the application 1 |
| Second face information | Second area | Interface of the application 2 |

The electronic device updates the binding relationships based on a status of the collected face information.

In a possible case shown in FIG. 15(b), the user 1 and the user 2 exchange locations. To be specific, the user 1 changes from facing the first area to facing the second area, and the user 2 changes from facing the second area to facing the first area. In this way, the electronic device detects the second face information in the first area, and detects the first face information in the second area. The electronic device updates the binding relationships to binding relationships shown in Table 7.

**Table 7**

| User identification information | Area | Display content |
|---|---|---|
| First face information | Second area | Interface of the application 1 |
| Second face information | First area | Interface of the application 2 |

Based on the updated binding relationships, the electronic device may control the first area to display the interface of the application 2, and the second area to display the interface of the application 1.

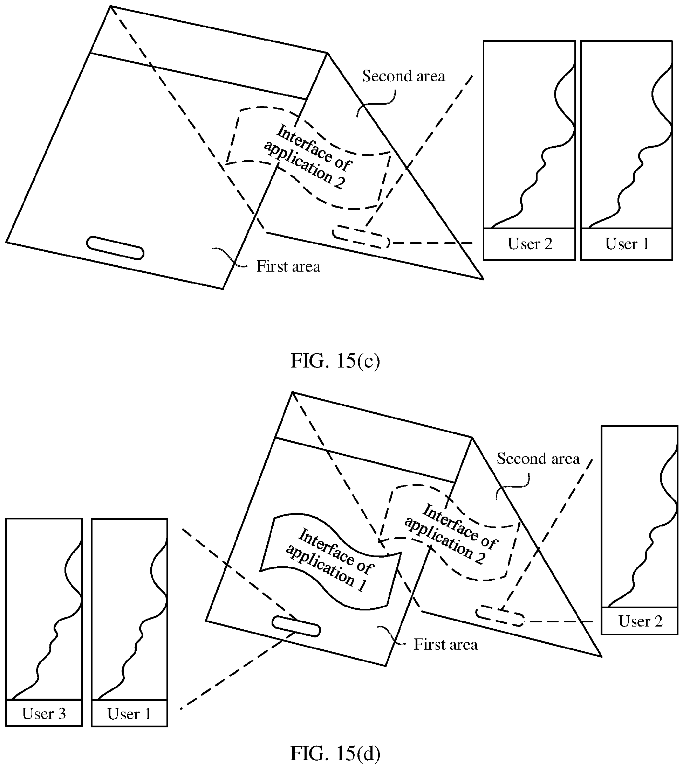

In another possible case shown in FIG. 15(c), the user 2 still faces the second area, and the user 1 changes from facing the first area to facing the second area. That is, the user 1 and the user 2 share a screen on one side. In this case, face information is not detected in the first area, and the first face information and the second face information are detected in the second area.

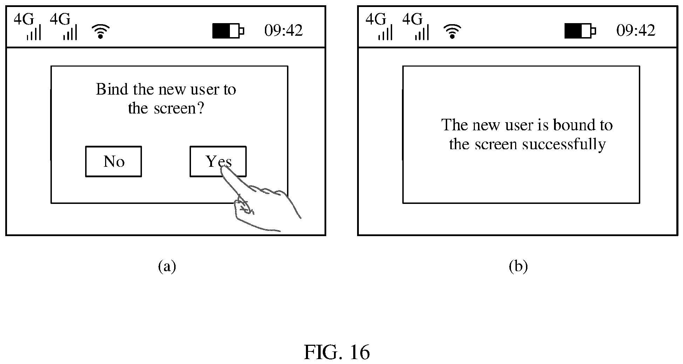

In some embodiments, a selection interface may pop up in the second area, to prompt the user to perform screen binding again. For example, a selection interface shown in (a) in FIG. 16 may pop up in the second area. The user may tap "Yes", to indicate the electronic device to add the first face information to the second area; or the user may tap "No", to indicate the electronic device not to perform screen binding again. When the user taps "Yes", the electronic device may update the binding relationships to binding relationships shown in Table 8, and display a prompt window in (b) in FIG. 16 in the second area, to notify the user that screen binding for the user 1 succeeds.

**Table 8**

| User identification information | Area | Display content |
|---|---|---|
| Second face information | Second area | Interface of the application 2 |
| First face information | Second area | Interface of the application 2 |

The electronic device may control, based on the updated binding relationships, the second area to display the interface of the application 2. In this case, the first area may enter a screen-off state, or continue to display the interface of the application 1. This is not limited in embodiments of this application.

In some other embodiments, because the first face information has been bound to the interface of the application 1, when the user 1 faces the second area, the electronic device may determine that the first face information has a binding relationship, and does not bind the first face information again. That is, the electronic device does not update the binding relationships, and the binding relationships are still those shown in Table 6. In this way, the electronic device still controls, based on the binding relationships, the second area to display the interface of the application 2. Optionally, because the electronic device does not detect the first face information in the first area, the electronic device may pause and exit a process of an application corresponding to the first area, and control the first area to enter the screen-off state. Optionally, the electronic device may also control the first area to continue to display the interface of the application 1.

That is, if a current display area is bound to the user, when a new user appears on the side of the display area, even if the new user is bound to an interface of an application, display content of the display area is not switched to the interface of the application bound to the new user. That is, content displayed in the display area does not change.

In still another possible case shown in FIG. 15(d), locations of the user 1 and the user 2 do not change. To be specific, the user 1 still faces the first area, and the user 2 still faces the second area. At the same time, a new user 3 appears, and the user 3 faces the first area. In this case, the first face information and third face information are detected in the first area, and the second face information is detected in the second area. If the electronic device determines that the third face information is not in an existing binding relationship table, the electronic device considers that a new user appears. In this case, a selection interface may pop up in the first area, to prompt the user to perform screen binding again. For example, the selection interface shown in (a) in FIG. 16 may pop up in the first area. The user may tap "Yes", to indicate the electronic device to add the third face information to the first area; or the user may tap "No", to indicate the electronic device not to perform screen binding again. When the user taps "Yes", the electronic device may update the binding relationships to binding relationships shown in Table 9, and display the prompt window in (b) in FIG. 16 in the first area, to notify the user that screen binding for the user 3 succeeds.

**Table 9**

| User identification information | Area | Display content |
|---|---|---|
| First face information | First area | Interface of the application 1 |
| Second face information | Second area | Interface of the application 2 |
| Third face information | First area | Interface of the application 1 |

Based on the updated binding relationships, the electronic device may control the first area to display the interface of the application 1, and the first area to display the interface of the application 2.

When a new user (for example, the user 1 in FIG. 15(c) and the user 3 in FIG. 15(d)) appears on the side of the first area or the second area, the electronic device may automatically perform screen binding for the new user without prompting the user to perform screen binding for the new user.

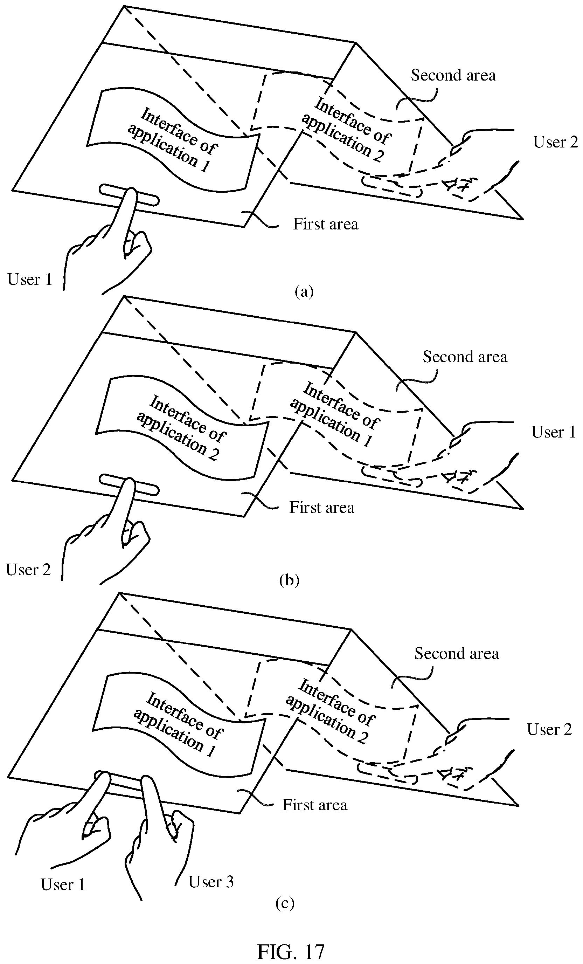

Similarly, as shown in FIG. 17, the electronic device may further control, based on collected fingerprint information, switching of display interfaces of areas on two sides of the display. The electronic device detects fingerprint information of users in the first area and the second area, to control switching of display interfaces of the first area and the second area. Different from FIG. 15(a) to FIG. 15(d), when prompting, in the manner shown in FIG. 9 or FIG. 10, the user 1 and the user 2 to perform screen binding, the electronic device pops up the prompt window shown in (c) in FIG. 9 in the first area and the second area, to prompt the user 1 and the user 2 to enter fingerprints.

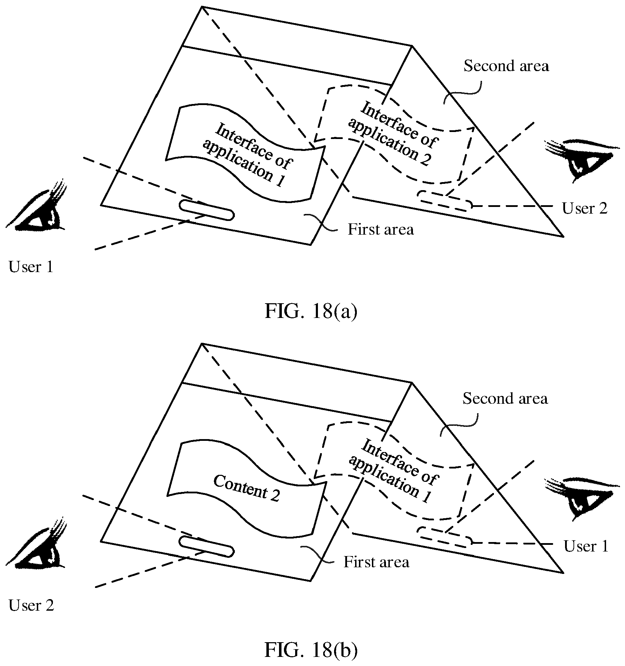

Similarly, as shown in FIG. 18(a) to FIG. 18(d), the electronic device may further control, based on collected iris information, switching of display interfaces of areas on two sides of the display. The electronic device detects fingerprint information of users in the first area and the second area, to control switching of display interfaces of the first area and the second area.

It should be understood that forms of interfaces, windows, and prompts shown in FIG. 16 may alternatively be any other forms of interfaces, windows, and prompts. This is not specifically limited in embodiments of this application.

In this way, when a plurality of users use the foldable electronic device in split-screen mode, when a location of a user relative to the electronic device changes, the electronic device may display, on a screen currently used by the user, content associated with the user, and the user does not need to perform an additional operation to switch screens, to improve viewing and operation experience of the user.

It may be understood that, that the location of the user changes in this embodiment of this application means that a location of the user relative to the electronic device changes. In other words, the location of the user may change, or a location or a direction of the electronic device may change. For example, that the user 1 moves from the side of the first area to the side of the second area may be that the user 1 changes a location, or may be that the user 1 rotates the electronic device, so that the second area faces the user 1. For another example, that the user 1 and the user 2 exchange locations may be that the user 1 moves to a location of the user 2 and the user 2 moves to a location of the user 1, or may be that the user rotates the electronic device, so that the first area faces the user 2 and the second area faces the user 1.

In this embodiment of this application, the electronic device may further determine a status of the user, such as "present" or "absent", based on whether a sensor collects user identification information, to control screen display.

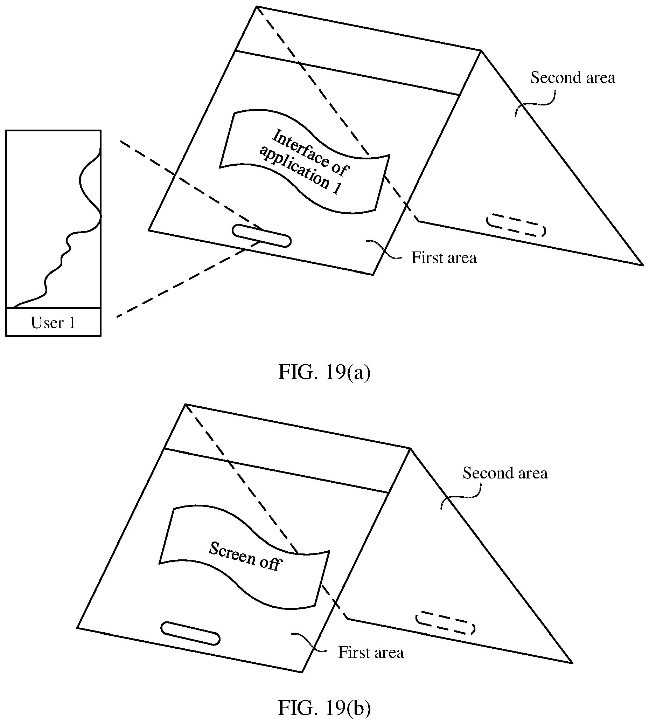

For example, the electronic device controls, based on collected face information, switching of display interfaces of areas on two sides of the display. FIG. 19(a) to FIG. 19(d) are schematic diagrams of screen display according to an embodiment of this application. As shown in FIG. 19(a) to FIG. 19(d), the electronic device is in the support form, a screen of the electronic device includes two areas: a first area and a second area, the first area and the second area face different directions, and the electronic device may detect face information in the first area and the second area by using structured light sensors.

After the electronic device enters the support form, the screen switching process is started, and the user 1 may be prompted, in a manner shown in FIG. 9 or FIG. 10, to perform screen binding.

As shown in FIG. 19(a), initially, the user 1 faces the first area, the second area is in a screen-off state, and the user 1 is bound to the interface of the application 1 corresponding to the first area. For a specific binding process, refer to related descriptions in FIG. 11. Details are not described herein again. Different from FIG. 11, user status information is added to the binding relationship, as shown in Table 10.

**Table 10**

| User identification information | Area | Display content | Status |
|---|---|---|---|
| First face information | First area | Interface of the application 1 | Present |

As shown in FIG. 19(b), the user 1 leaves the first area.

There are many manners in which the electronic device determines that the user 1 is absent. For example, when the first face information is not detected in the first area, it is determined that the user 1 is absent. For another example, when the first face information is not detected in the first area in a preset period of time, it is determined that the user 1 is absent. For another example, when the first face information is not detected in the first area and the second area, it is determined that the user 1 is absent. For another example, when the first face information is not detected in the first area and the second area in a preset period of time, it is determined that the user 1 is absent. For another example, when a quantity of periods in which the first face information is not detected in the first area is greater than or equal to a preset value, it is determined that the user 1 is absent. For another example, when a quantity of periods in which the first face information is not detected in the first area and the second area is greater than or equal to a preset value, it is determined that the user 1 is absent. For another example, when any face information is not detected in the first area or detected face information does not correspond to any application in the electronic device, it is determined that the user 1 is absent.

When the electronic device determines that the user 1 leaves, the electronic device updates the user status to "absent", as shown in Table 11.

**Table 11**

| User identification information | Area | Display content | Status |
|---|---|---|---|
| First face information | First area | Interface of the application 1 | Absent |

When the user status is "absent", the electronic device may control the first area to turn off the screen, and pause a process of the application corresponding to the first area. For example, when the user 1 plays a video by using the electronic device, the electronic device pauses video playing, and controls the first area to turn off the screen.

The electronic device continues to detect the face information of the user 1.

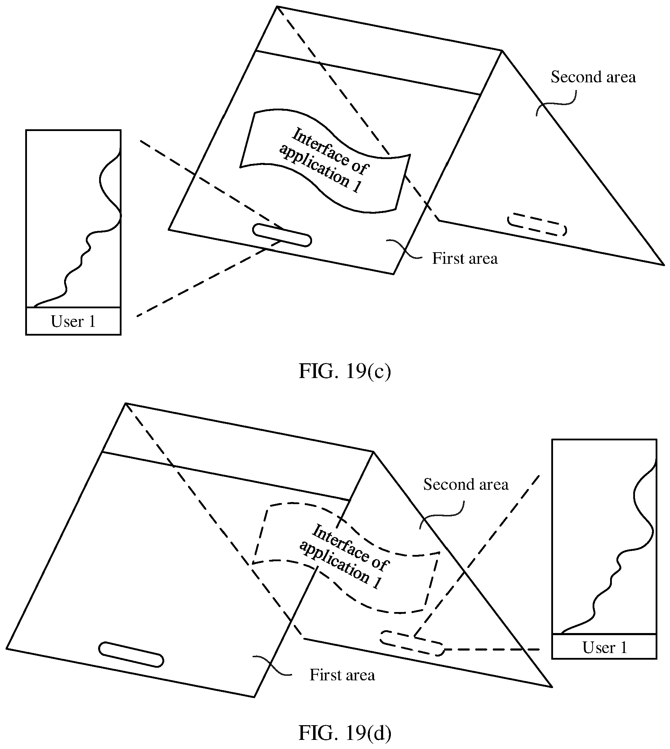

In a possible case shown in FIG. 19(c), after a period of time, the user 1 returns and faces the first area, and the first face information is detected again in the first area. The electronic device determines that the user returns, and updates the user status to "present", as shown in Table 12.

**Table 12**

| User identification information | Area | Display content | Status |
|---|---|---|---|
| First face information | First area | Interface of the application 1 | Present |

The electronic device may turn on and unlock the first area, and continue each process of the application corresponding to the first area. For example, when the user equipment plays a video by using the electronic device, the electronic device turns on the first area, and continues to play the video.

In another possible case shown in FIG. 19(d), after a period of time, the user 1 returns and faces the second area, and the first face information is detected in the second area. The electronic device determines that the user returns, updates the binding relationship, and updates the user status to "present", as shown in Table 13.

**Table 13**

| User identification information | Area | Display content | Status |
|---|---|---|---|
| First face information | Second area | Interface of the application 1 | Present |

The electronic device may turn on and unlock the second area, and continue each process of an application corresponding to the second area. For example, when the user equipment plays a video by using the electronic device, the electronic device turns on the second area, and continues to play the video.

When the electronic device is set to a fingerprint-based screen switching manner or an iris-based screen switching manner, a manner of determining whether a user is present or absent and a screen display manner of the electronic device are similar to those shown in FIG. 18(a) to FIG. 18(d). Details are not described herein again.

In this way, when the user is absent, the electronic device may turn off the screen. This helps reduce power consumption of the electronic device. When the user is present again, content previously viewed by the user is automatically displayed, and the user does not need to perform an additional operation. This helps improve viewing and operation experience of the user.

It should be further understood that a disposing position of the sensor in FIG. 10 to FIG. 19(a) to FIG. 19(d) is merely an example, and the sensor may alternatively be disposed at another position. This is not specifically limited in embodiments of this application.

The foregoing describes, by using FIG. 7(a) and FIG. 7(b) to FIG. 19(a) to FIG. 19(d), several groups of GUIs and scenarios provided in embodiments of this application. In embodiments of this application, an application is bound to user identification information. When a screen facing a user changes, the electronic device may display, on a screen currently used by the user, an interface of an application bound to the user. This is convenient for the user to view and operate.

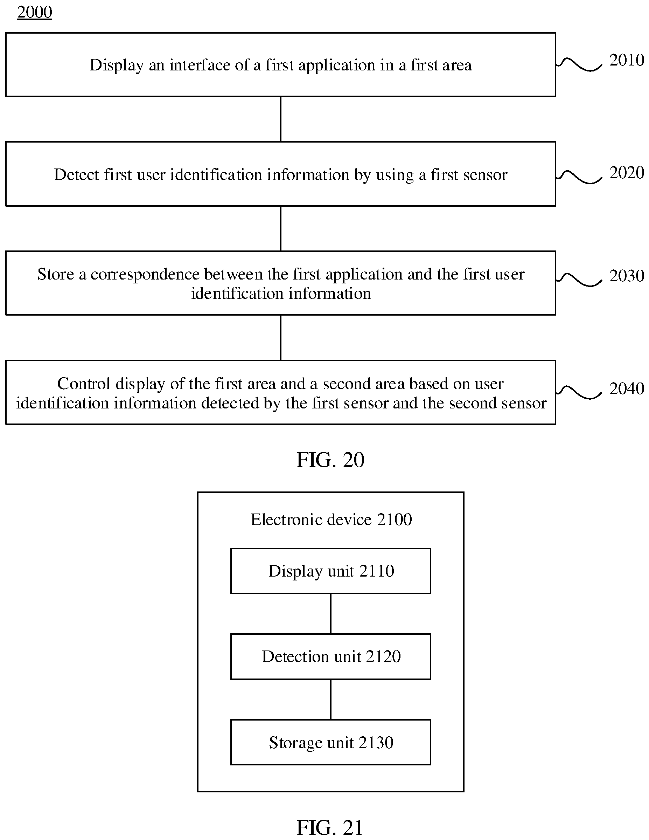

With reference to FIG. 20, the following describes a schematic flowchart of a screen display control method 2000 according to an embodiment of this application. The method 2000 shown in FIG. 20 may be performed by an electronic device provided with a foldable screen. The screen is divided into a first area and a second area when the screen is folded, the first area corresponds to a first sensor, and the second area corresponds to a second sensor.

It should be understood that the first sensor and the second sensor may be any sensor that can detect user identification information, for example, may be a fingerprint sensor, an iris sensor, or a structured light sensor.

Disposing positions of the first sensor and the second sensor are not specifically limited in this application, provided that the first sensor can detect user identification information entered by a user in the first area and the second sensor can detect user identification information entered by a user in the second area.

For example, the first sensor may be disposed in the first area, and the second sensor may be disposed in the second area.

For another example, the first sensor and the second sensor may also be disposed on a same side, but are respectively configured to detect the user identification information entered by the user in the first area and the user identification information entered by the user in the second area.

The user identification information is information that can uniquely determine a user identity. For example, the user identification information may be face information of a user collected by the structured light sensor, fingerprint information of a user collected by the fingerprint sensor, or iris information of a user collected by the iris sensor.

The method 2000 includes the following steps.

2010: Display an interface of a first application in the first area.

For example, as shown in (a) in FIG. 11, an interface of an application 1 is displayed in the first area.

For example, as shown in (a) in FIG. 12, the interface of the application 1 is displayed in the first area.

For example, as shown in (a) in FIG. 13, the interface of the application 1 is displayed in the first area.

For example, the first application is an application displayed in the entire first area before first user identification information is detected by using the first sensor.

For example, the first application is an application selected by the user from at least two applications currently displayed in the first area.

2020: Detect the first user identification information by using the first sensor.

For example, as shown in (a) in FIG. 11, first face information is detected by using a first structured light sensor.

For example, as shown in (a) in FIG. 12, first fingerprint information is detected by using a first fingerprint sensor.

For example, as shown in (a) in FIG. 13, first iris information is detected by using a first iris sensor.

Optionally, before the first user identification information is detected by using the first sensor, it is determined that the electronic device is in a folded form or a support form, and a screen switching process is started.

Optionally, before the first user identification information is detected by using the first sensor, the electronic device is set, to enable a screen switching function.

For example, as shown in FIG. 7(a) and FIG. 7(b) or FIG. 8(a) to FIG. 8(c), the electronic device is set, to enable the screen switching function.

Optionally, when the screen switching process is started and it is determined that the screen switching function of the electronic device is enabled, the electronic device may pop up a selection interface in the first area of the display, to prompt the user to perform screen binding.

For example, as shown in FIG. 9 or FIG. 10, the user is prompted to perform screen binding, to generate a correspondence between the first application and the first user identification information.

2030: Store the correspondence between the first application and the first user identification information.

In some scenarios, the second area is also used by a user. For the second area, a correspondence between a second application and second user identification information may also be generated and stored by using steps similar to the foregoing steps, and details are not described herein again.

Because a correspondence between an application and user identification information has been stored, when a screen facing a user changes, based on user identification information detected by the first sensor and the second sensor, an interface of an application corresponding to the user can be displayed on a screen currently used by the user. 2040: Control display of the first area and the second area based on the user identification information detected by the first sensor and the second sensor.

For example, as shown in (b) in FIG. 11, if the first face information is detected by using a second structured light sensor, the interface of the application 1 is displayed in the second area. Optionally, in this case, the first area may enter a screen-off state, or may continue to display another interface, for example, a desktop interface. This is not specifically limited in this embodiment of this application.

For example, as shown in (b) in FIG. 12, if the first fingerprint information is detected by using the second sensor, the interface of the application 1 is displayed in the second area. Optionally, in this case, the first area may enter a screen-off state, or may continue to display another interface, for example, a desktop interface. This is not specifically limited in this embodiment of this application.

For example, as shown in (b) in FIG. 13, if the first iris information is detected by using the second sensor, the interface of the application 1 is displayed in the second area. Optionally, in this case, the first area may enter a screen-off state, or may continue to display another interface, for example, a desktop interface. This is not specifically limited in this embodiment of this application.

For example, as shown in FIG. 15(b), if the first face information is detected by using the second structured light sensor, and second face information is detected by using the first structured light sensor, the interface of the application 1 is displayed in the second area, and an interface of an application 2 is displayed in the first area.

For example, as shown in (b) in FIG. 17, if the first fingerprint information is detected by using a second fingerprint sensor, and second fingerprint information is detected by using the first fingerprint sensor, the interface of the application 1 is displayed in the second area, and the interface of the application 2 is displayed in the first area.

For example, as shown in FIG. 18(b), if the first iris information is detected by using a second iris sensor, and second iris information is detected by using the first iris sensor, the interface of the application 1 is displayed in the second area, and the interface of the application 2 is displayed in the first area.

For example, as shown in FIG. 15(c), if the first face information and the second face information are detected by using the second structured light sensor, the interface of the application 2 is displayed in the second area.

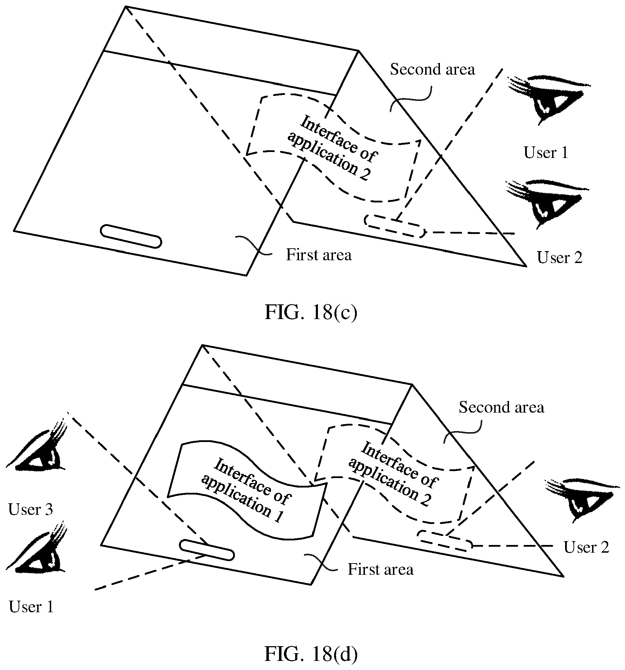

For example, as shown in FIG. 18(c), if the first iris information and the second iris information are detected by using the second iris sensor, the interface of the application 2 is displayed in the second area.

For example, as shown in FIG. 15(d), if the first face information and third face information are detected by using the first structured light sensor, the interface of the application 2 is displayed in the second area, and the interface of the application 1 is displayed in the first area.

For example, as shown in (c) in FIG. 17, if the first fingerprint information and third fingerprint information are detected by using the first fingerprint sensor, the interface of the application 2 is displayed in the second area, and the interface of the application 1 is displayed in the first area.

For example, as shown in FIG. 18(d), if the first iris information and third iris information are detected by using the first iris sensor, the interface of the application 2 is displayed in the second area, and the interface of the application 1 is displayed in the first area.

For example, as shown in FIG. 19(b), if any iris information is not detected by using the first iris sensor, the electronic device turns off the first area.

For example, as shown in FIG. 19(c), if the first iris information is detected by using the first iris sensor after a period of time, the interface of the application 1 continues to be displayed in the first area.

For example, as shown in FIG. 19(d), if the first iris information is detected by using the second iris sensor after a period of time, the interface of the application 1 continues to be displayed in the second area.

For example, if the first user identification information is detected by using both the first sensor and the second sensor, an interface of the second application is displayed in the first area, and the interface of the first application is displayed in the second area; or the interface of the first application is displayed in the first area, and the interface of the second application is displayed in the second area.

The method 2000 further includes: detecting a second operation in the first area; and in response to the second operation, closing the second application, and displaying a desktop interface or an interface displayed before the second application is started in the first area; and after closing the second application, detecting a third operation in the first area; in response to the third operation, starting a third application and displaying an interface of the third application in the first area; and storing a correspondence between the third application and the second user identification information.

It may be understood that, to implement the foregoing functions, the electronic device includes corresponding hardware and/or software modules for performing the functions. Algorithm steps in examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, division into modules is an example and is merely logical function division. During actual implementation, there may be another division manner.

When each function module is obtained through division based on each corresponding function, FIG. 21 is a possible schematic diagram of composition of an electronic device 2100 in the foregoing embodiments. As shown in FIG. 21, the electronic device 2100 may include a display unit 2110, a detection unit 2120, and a storage unit 2130.

The display unit 2110 may be configured to support the electronic device 2100 in performing step 2010, step 2040, and/or another process of the technology described in this specification.

The detection unit 2120 may be configured to support the electronic device 2100 in performing step 2020 and/or another process of the technology described in this specification.

The storage unit 2130 may be configured to support the electronic device 2100 in performing step 2030 and/or another process of the technology described in this specification.

It should be noted that all related content of the steps in the foregoing method embodiments may be cited in function descriptions of corresponding functional modules. Details are not described herein again.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electrical, mechanical, or another form.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A screen display control method, performed by an electronic device provided with a foldable screen, wherein the screen is divided into a first area and a second area when the screen is folded, the first area corresponds to a first sensor, the second area corresponds to a second sensor, and the method comprises:
displaying an interface of a first application in the first area;
detecting first user identification information by using the first sensor;
storing a correspondence between the first application and the first user identification information; and
if the first user identification information is detected by using the second sensor, displaying the interface of the first application in the second area based on the correspondence between the first application and the first user identification information.

2. The method according to claim 1, wherein the method further comprises:
if the first user identification information is detected by using the second sensor, displaying the interface of the first application in the second area, and turning off the first area.

3. The method according to claim 1, wherein the method further comprises:
displaying an interface of a second application in the second area;
detecting second user identification information by using the second sensor;
storing a correspondence between the second application and the second user identification information; and
if the second user identification information is detected by using the first sensor but the first user identification information is not detected, displaying the interface of the second application in the first area based on the correspondence between the second application and the second user identification information.

4. The method according to claim 3, wherein the method further comprises:
if the second user identification information is detected by using the first sensor, and the first user identification information is detected by using the second sensor, displaying the interface of the first application in the second area, and displaying the interface of the second application in the first area.

5. The method according to claim 3 or 4, wherein the method further comprises:
turning off the first area if any user identification information is not detected by using the first sensor, or user identification information detected by using the first sensor does not correspond to any application in the electronic device.

6. The method according to any one of claims 3 to 5, wherein the method further comprises:
if the first user identification information and the second user identification information are detected by using the first sensor, displaying the interface of the first application in the first area.

7. The method according to any one of claims 3 to 6, wherein the method further comprises:
if the first user identification information and third user identification information are detected by using the first sensor, and the third user identification information does not correspond to any application in the electronic device, displaying the interface of the first application in the first area.

8. The method according to claim 7, wherein the method further comprises:
prompting a user whether to store a correspondence between the first application and the third user identification information;
detecting a first operation in the first area; and
in response to the first operation, storing the correspondence between the first application and the third user identification information.

9. The method according to any one of claims 3 to 8, wherein the method further comprises:
if the first user identification information is detected by using both the first sensor and the second sensor,
displaying the interface of the second application in the first area, and displaying the interface of the first application in the second area; or
displaying the interface of the first application in the first area, and displaying the interface of the second application in the second area.

10. The method according to any one of claims 3 to 9, wherein the method further comprises:
detecting a second operation in the first area; and
in response to the second operation, closing the second application, and displaying a desktop interface or an interface displayed before the second application is started in the first area.

11. The method according to claim 10, wherein after the closing the second application, the method further comprises:
detecting a third operation in the first area;
in response to the third operation, starting a third application and displaying an interface of the third application in the first area; and
storing a correspondence between the third application and the second user identification information.

12. The method according to any one of claims 3 to 11, wherein the first user identification information and the second user identification information comprise face information, fingerprint information, and iris information.

13. The method according to any one of claims 1 to 12, wherein before the detecting first user identification information by using the first sensor, the method further comprises:
prompting the user to enter user identification information corresponding to the first application.

14. The method according to any one of claims 1 to 13, wherein the first application is:
an application displayed in the entire first area before the first user identification information is detected by using the first sensor; or
an application selected by the user from at least two applications currently displayed in the first area.

15. The method according to any one of claims 1 to 14, wherein before the detecting first user identification information by using the first sensor, the method further comprises:
determining that the electronic device is in a folded form or a support form.

16. An electronic device, comprising:
a foldable screen, wherein the screen is divided into a first area and a second area when the screen is folded;
one or more processors;
one or more memories;
one or more sensors; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 15.

17. A computer-readable storage medium, wherein the computer-readable storage medium stores instructions, and when the instructions are run on an electronic device, the electronic device is enabled to perform the method according to any one of claims 1 to 15.

18. A computer program product comprising instructions, wherein when the computer program product is run on an electronic device, the electronic device is enabled to perform the method according to any one of claims 1 to 15.
